(19) Europäisches Patentamt
European Patent Office
Office européen des brevets

(11) EP 4 794 406 A1

(12) EUROPEAN PATENT APPLICATION
published in accordance with Art. 153(4) EPC

(43) Date of publication:
**19.08.2026 Bulletin 2026/34**

(21) Application number: **23955122.9**

(22) Date of filing: **11.10.2023**

(51) International Patent Classification (IPC):
***H04W 56/00*** *(2009.01)*

(52) Cooperative Patent Classification (CPC):
**H04W 56/00**

(86) International application number:
**PCT/CN2023/124091**

(87) International publication number:
**WO 2025/076739 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **LU, Liuming**
  **Dongguan, Guangdong 523860 (CN)**
- **LUO, Chaoming**
  **Dongguan, Guangdong 523860 (CN)**
- **GAO, Ning**
  **Dongguan, Guangdong 523860 (CN)**

(74) Representative: **Taor, Simon Edward William**
**Venner Shipley LLP**
**TIDE Bankside**
**8 Emerson Street**
**London SE1 9DU (GB)**

# (54) WIRELESS COMMUNICATION METHOD AND COMMUNICATION DEVICE

(57) A wireless communication method and a communication device are provided. The method includes the following. A first device determines, according to state information of the first device, whether to initiate transmission opportunity (TXOP) sharing or initiate a frame exchange with a second device. The first device and the second device communicate through a relay device, a basic service set (BSS) where a link between the first device and the relay device is located is a first BSS, and a BSS where a link between the second device and the relay device is located is a relay BSS. The state information of the first device includes one or more of the following: first state information for indicating predicted duration information of future media traffic generated due to frame transmission by a station within the first BSS; second state information for indicating predicted duration information of future media traffic generated due to frame transmission by a station within the relay BSS; and third state information for indicating predicted duration information of future media traffic generated due to frame transmission by a station within an overlapping basic service set (OBSS), in which the first device is located, except the first BSS and the relay BSS

determine whether to initiate TXOP sharing according to state information of first device — S710

FIG. 7A

EP 4 794 406 A1

## Description

TECHNICAL FIELD

The present disclosure relates to the field of communication technologies, and more specifically, to a wireless communication method and a communication device.

BACKGROUND

With the development of technologies, some communication standard projects have proposed relay-based communication technologies. For transmission opportunity (TXOP) sharing based on relay, a key technology is how to synchronize states of operating channels in basic service sets (BSSs) in which various devices are located is. However, relevant technical solutions have not been proposed in the current related art.

SUMMARY

The present disclosure provides a wireless communication method and a communication device. Various aspects involved in the present disclosure are introduced below.

In a first aspect, a wireless communication method is provided, which includes the following. A first device determines, according to state information of the first device, whether to initiate transmission opportunity (TXOP) sharing or initiate a frame exchange with a second device. The first device and the second device communicate through a relay device, a basic service set (BSS) where a link between the first device and the relay device is located is a first BSS, and a BSS where a link between the second device and the relay device is located is a relay BSS. The state information of the first device includes one or more of the following: first state information for indicating predicted duration information of future media traffic generated due to frame transmission by a station within the first BSS; second state information for indicating predicted duration information of future media traffic generated due to frame transmission by a station within the relay BSS; and third state information for indicating predicted duration information of future media traffic generated due to frame transmission by a station within an overlapping basic service set (OBSS), in which the first device is located, except the first BSS and the relay BSS.

In a second aspect, a wireless communication method is provided, which includes the following. A second device determines, according to state information of the second device, whether to respond to TXOP sharing initiated by a first device or whether to initiate a frame exchange with the first device. The first device and the second device communicate via a relay device, a BSS where a link between the second device and the relay device is located is a second BSS, and a BSS where a link between the first device and the relay device is located is a relay BSS. The state information of the second device includes one or more of: fourth state information for indicating predicted duration information of future media traffic generated due to frame transmission by a station within the second BSS; fifth state information for indicating predicted duration information of future media traffic generated due to frame transmission by a station within the relay BSS; and sixth state information for indicating predicted duration information of future media traffic generated due to frame transmission by a station within an OBSS, in which the second device is located, except the second BSS and the relay BSS.

In a third aspect, a wireless communication method is provided, which includes the following. A relay device determines, according to state information of a third device, whether to respond to TXOP sharing initiated by a first device or respond to a frame exchange between the first device and a second device. The third device belongs to the relay device, and the relay device is used to implement communication between the first device and the second device. In a case that the third device and the first device communicate via a link, a BSS where the link between the third device and the first device is located is a third BSS, and a BSS where a link between the relay device and the second device is located is a relay BSS. In a case that the third device and the second device communicate via a link, a BSS where the link between the third device and the second device is located is a third BSS, and a BSS where a link between the relay device and the first device is located is a relay BSS. The state information of the third device includes one or more of: seventh state information for indicating predicted duration information of future media traffic generated due to frame transmission by a station within the third BSS; eighth state information for indicating predicted duration information of future media traffic generated due to frame transmission by a station within the relay BSS; and ninth state information for indicating predicted duration information of future media traffic generated due to frame transmission by a station within an OBSS, in which the third device is located, except the third BSS and the relay BSS.

In a fourth aspect, a communication device is provided. The communication device is a first device. The communication device includes a first determining unit configured to determine, according to state information of the first device, whether to initiate TXOP sharing or initiate a frame exchange with a second device. The first device and the second device communicate via a relay device. A BSS where a link between the first device and the relay device is located is a first BSS. A BSS where a link between the second device and the relay device is located is a relay BSS. The state information of

the first device includes one or more of: first state information for indicating predicted duration information of future media traffic generated due to frame transmission by a station within the first BSS; second state information for indicating predicted duration information of future media traffic generated due to frame transmission by a station within the relay BSS; and third state information for indicating predicted duration information of future media traffic generated due to frame transmission by a station within a OBSS, in which the first device is located, except the first BSS and the relay BSS.

In a fifth aspect, a communication device is provided. The communication device is a second device. The communication device includes a second determining unit configured to determine, according to state information of the second device, whether to respond to TXOP sharing initiated by a first device or whether to initiate a frame exchange with the first device. The first device and the second device communicate via a relay device. A BSS where a link between the second device and the relay device is located is a second BSS, and a BSS where a link between the first device and the relay device is located is a relay BSS. The state information of the second device includes one or more of: fourth state information for indicating predicted duration information of future media traffic generated due to frame transmission by a station within the second BSS; fifth state information for indicating predicted duration information of future media traffic generated due to frame transmission by a station within the relay BSS; and sixth state information for indicating predicted duration information of future media traffic generated due to frame transmission by a station within a OBSS, in which the second device is located, except the second BSS and the relay BSS.

In a sixth aspect, a communication device is provided. The communication device is a relay device. The communication device includes a third determining unit configured to determine, according to state information of a third device, whether to respond to TXOP sharing initiated by a first device or respond to a frame exchange between the first device and a second device. The third device belongs to the relay device, and the relay device is used to implement communication between the first device and the second device. In a case that the third device and the first device communicate via a link, a BSS where the link between the third device and the first device is located is a third BSS, and a BSS where a link between the relay device and the second device is located is a relay BSS. In a case that the third device and the second device communicate via a link, a BSS where the link between the third device and the second device is located is a third BSS, and a BSS where a link between the relay device and the first device is located is a relay BSS. The state information of the third device includes one or more of: seventh state information for indicating predicted duration information of future media traffic generated due to frame transmission by a station within the third BSS; eighth state information for indicating predicted duration information of future media traffic generated due to frame transmission by a station within the relay BSS; and ninth state information for indicating predicted duration information of future media traffic generated due to frame transmission by a station within an OBSS, in which the third device is located, except the third BSS and the relay BSS.

In a seventh aspect, a communication device is provided, which includes a processor and a memory. The memory is configured to store one or more computer programs. The processor is configured to invoke the computer programs in the memory to cause the communication device to perform part or all of the operations in the method of the first aspect.

In an eighth aspect, a communication system is provided in embodiments of the present disclosure. The system includes the aforementioned communication device. In another possible design, the system may further include other devices that interact with the communication device in the solution provided in the embodiments of the present disclosure.

In a ninth aspect, a computer-readable storage medium is provided in embodiments of the present disclosure. The computer-readable storage medium stores a computer program. The computer program is operable with a communication device to perform part or all of the steps in the methods of the foregoing aspects.

In a tenth aspect, a computer program product is provided in embodiments of the present disclosure. The computer program product includes a non-transitory computer-readable storage medium storing a computer program. The computer program is operable with a communication device to perform part or all of the steps in the methods of the foregoing aspects. In some implementations, the computer program product may be a software installation package.

In an eleventh aspect, a chip is provided in embodiments of the present disclosure. The chip includes a memory and a processor. The processor can invoke and run a computer program from the memory to implement part or all of the steps described in the methods of the foregoing aspects.

According to the state information of the first device, the first device can obtain predicted duration information of future media traffic related to BSSs involved in relay-based communication, so as to synchronize the states of the operating channels of the BSSs where various devices are located, and determine whether to initiate TXOP sharing or initiate frame exchange with the second device.

## BRIEF DESCRIPTION OF THE DRAWINGS

FIG. 1 is a schematic diagram of a wireless communication system to which embodiments of the present disclosure is

applied.
FIG. 2 is an example diagram of a relay node.
FIG. 3 is an example diagram of a frame interaction procedure based on medium access control (MAC) relay.
FIG. 4 is an example diagram of a Sub-1G Hz (S1G) relay architecture.
FIG. 5A is an example diagram of a downlink relay transmission process based on explicit acknowledgement (ACK).
FIG. 5B is an example diagram of an uplink relay transmission process based on explicit ACK.
FIG. 5C is an example diagram of a downlink relay transmission process based on implicit ACK.
FIG. 5D is an example diagram of an uplink relay transmission process based on implicit ACK.
FIG. 6 is an example flowchart of a trigger-based TXOP sharing process.
FIG. 7A is a schematic flowchart of a wireless communication method according to an embodiment of the present disclosure.
FIG. 7B is a schematic flowchart of another wireless communication method according to an embodiment of the present disclosure.
FIG. 7C is a schematic flowchart of another wireless communication method according to an embodiment of the present disclosure.
FIG. 8A is a schematic structural diagram of a relay device according to an embodiment of the present disclosure.
FIG. 8B is a schematic structural diagram of a relay device according to an embodiment of the present disclosure.
FIG. 8C is a schematic structural diagram of a relay device according to an embodiment of the present disclosure.
FIG. 8D is an example diagram of a relay architecture according to an embodiment of the present disclosure.
FIG. 9 is an example diagram of a relay-based TXOP sharing process provided in Embodiment 1.
FIG. 10 is an example diagram of a relay-based TXOP sharing process provided in Embodiment 2.
FIG. 11 is a schematic diagram of a frame format of a first-type indication frame according to an embodiment of the present disclosure.
FIG. 12 is an example diagram of a format of a control frame field.
FIG. 13 is a schematic structural diagram of a communication device according to an embodiment of the present disclosure.
FIG. 14 is a schematic structural diagram of another communication device according to an embodiment of the present disclosure.
FIG. 15 is a schematic structural diagram of another communication device according to an embodiment of the present disclosure.
FIG. 16 is a schematic structural diagram of an apparatus for communication according to an embodiment of the present disclosure.

DETAILED DESCRIPTION

Hereinafter, technical solutions in the present disclosure are described with reference to the accompanying drawings.

**Communication system**

The technical solutions of the embodiments of the present disclosure may be applied to various communication systems, such as, wireless local area networks (WLAN), wireless fidelity (Wi-Fi), high performance radio local area networks (HIPELAN), wide area networks (WAN), cellular networks, or other communication systems. For another example, the technical solutions provided by the embodiments of the present disclosure may be applied to a communication system adopting the standard 802.11. Exemplarily, the standard 802.11 includes, but is not limited to, the standard 802.11ax, the standard 802.11be, the next generation standard 802.11, etc.

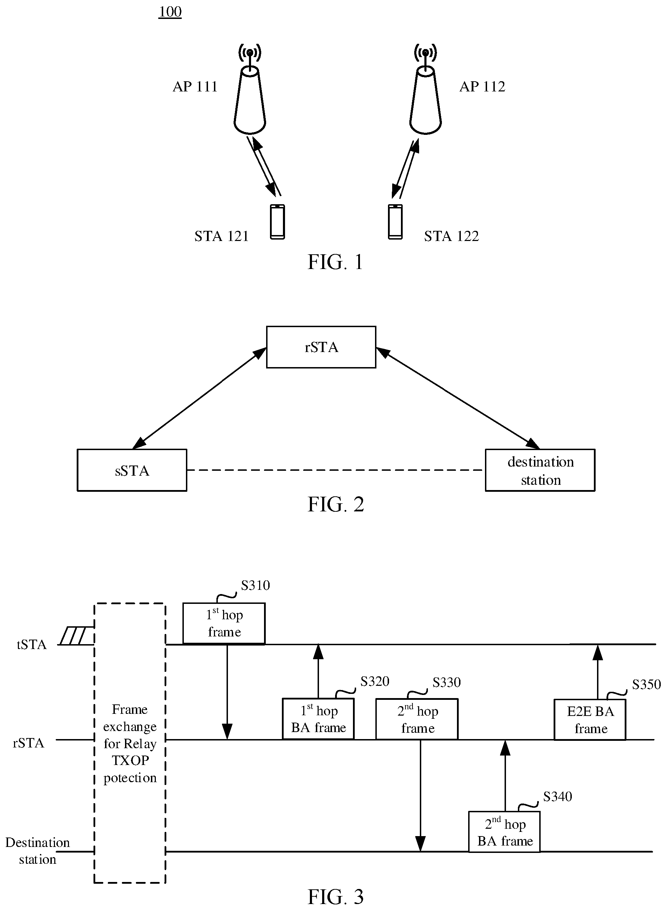

FIG. 1 illustrates a schematic diagram of a communication system to which an embodiment of the present disclosure is applied. With reference to FIG. 1, a communication device in the communication system 100 may include an access point (AP) 111, an AP 112, a station (STA) 121, and a STA 122. Herein, the STA 121 may access a network through the AP 111, and the STA 122 may access the network through the AP 112.

In some implementations, the STA may set up an association with one or more APs, after which the STA may communicate with the AP(s) having the association with the STA. With reference to FIG. 1, the AP 111 may communicate with the STA 121 after the association is set up, and the AP 112 may also communicate with the STA 122 after the association is set up.

In some implementations, the communication in the communication system 100 may be the communication between an AP and a non-AP STA, the communication between a non-AP STA and a non-AP STA, or the communication between an STA and a peer STA. Herein, the peer STA may be a device that communicates with the STA in a peer-to-peer manner. For example, the peer STA may be the AP or the non-AP STA.

It is to be understood that FIG. 1 exemplarily illustrates two AP STAs and two non-AP STAs. The communication system 100 may also include more AP STAs, or the communication system 100 may include other numbers of non-AP STAs, which is not limited in the embodiments of the present disclosure.

In addition, the aforementioned communication system may be applied to a scenario of multi-device cooperation, such as, a scenario of multiple access points (multi-AP) cooperation, or a scenario of multi-STA cooperation, etc.

In the embodiments of the present disclosure, the name(s) of the AP and/or the STA are not limited. In some scenarios, the AP may also be referred to as an AP STA, i.e., in a sense, the AP is also an STA. In other scenarios, the STA may also be referred to as a non-AP STA.

In some scenarios, the aforementioned communication device may also be a "multi-link device" (MLD), i.e., a device that may communicate through multiple communication links. Herein, the multiple communication links may include communication links in different frequency bands. For example, the frequency bands may include a millimeter wave frequency band and/or a low frequency band. Typically, if the multi-link device is the AP, the AP may also be referred to as a "multi-link AP"; and if the multi-link device is the STA, the STA may also be referred to as a "multi-link STA".

In the embodiments of the present disclosure, the AP may be a device in a wireless network. The AP may be a communication entity, such as, a communication server, a router, a switch, a network bridge, etc., or the AP may include various forms of macro base stations, micro base stations, relay stations, etc. Further, the AP may also be a chip, a circuit or a processing system in the various forms of such devices, thereby implementing each of the methods and functions of the embodiments of the present disclosure. The AP may be applied to various scenarios, for example, the AP may be a sensor node (such as a smart water meter, a smart electricity meter, a smart air detection node) in a smart city, a smart device (such as a smart camera, a projector, a display, a television, a stereo, a refrigerator, a washing machine, etc.) in a smart home, a node in the Internet of Things, an entertainment terminal (such as, a wearable device, for example, in augmented reality (AR) and virtual reality (VR)), a smart device (such as a printer, a projector, etc.) in a smart office, a device in the Internet of Vehicles, and some infrastructure (such as a vending machine, a self-service navigation desk in a supermarket, a self-service checkout device, a self-service ordering machine) in daily life scenarios, etc.

In some implementations, the role of the STA in the communication system is not absolute, and in some scenarios, the STA may act as an AP. For example, in a scenario where a mobile phone is connected to a router, the mobile phone may be the non-AP STA. However, in a case where the mobile phone serves as a hotspot for other mobile phones, the mobile phone acts as the AP.

In the embodiments of the present disclosure, the STA in the embodiments of the present disclosure may be a device having a wireless transceiving function. For example, the STA may support protocols of standard 802.11 family, and may communicate with an AP or another STA. For example, the STA may be any user communication device that allows a user to communicate with the AP and further communicate with the WLAN. For example, the STA may be a User Equipment (UE), a Mobile Station (MS), a Mobile Terminal (MT), an access terminal, a subscriber unit, a subscriber station, a mobile station, a remote station, a remote terminal, a mobile device, a user terminal, a terminal, a wireless communication device, a user agent or a user apparatus, etc.

The STA in the embodiments of the present disclosure may also be a device that provides voice/data connectivity to the user. For example, the STA may be a handheld device having a wireless connection function, an in-vehicle device, etc. For example, the STA may be a mobile phone, a tablet, a laptop, a handheld computer, a Mobile Internet Device (MID), a wearable device, a Virtual Reality (VR) device, an Augmented Reality (AR) device, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, a cellular phone, a cordless phone, a Session Initiation Protocol (SIP) phone, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in a 5G network, or a terminal device in a future evolved Public Land Mobile Network (PLMN), which is not limited in the embodiments of the present disclosure.

By way of example but not limitation, in the embodiments of the present disclosure, the STA may also be a wearable device. The wearable device, also referred to as a wearable intelligent device, is a generic term of wearable devices obtained by performing intelligent design and development on daily wearing products by using the wearable technology, such as glasses, gloves, watches, clothes, and shoes. For example, the wearable intelligent device may be the smart watches or smart glasses; and the wearable intelligent device may focus only on a certain application function, such as various smart bracelets and smart jewelry for monitoring physical signs, which are necessary to be used in conjunction with another device such as a smart phone.

In addition, in the embodiments of the present disclosure, the STA may also be a terminal device in the Internet of Things (IoT) system. The IoT is an important part of the future development of information technology, and the main technical characteristics thereof is to connect articles to the network through communication technology, thereby implementing an intelligent network of human-to-machine interconnection and thing-to-thing interconnection. In the embodiments of the present disclosure, the IoT technology can achieve massive connection, deep coverage, and power

saving of terminals through, such as, a Narrow Band (NB) technology.

Furthermore, in the embodiments of the present disclosure, the STA may be a device in the Internet of Vehicles system. The communication manners in the Internet of Vehicles system are collectively referred to as V2X (X represents anything). For example, the V2X communication includes: a vehicle to vehicle (V2V) communication, a vehicle to infrastructure (V2I) communication, a vehicle to pedestrian (V2P) communication, a vehicle to network (V2N) communication, etc.

Moreover, in the embodiments of the present disclosure, the STA may also include: a sensor such as a smart printer, a train detector, and a gas station; and the main functions of the sensor may include: data collection (for some terminal devices), reception of control information and downlink data from the AP, and transmission of electromagnetic waves, and data transmission to the AP.

In addition, the AP in the embodiments of the present disclosure may be a device for communicating with the STA, the AP may be a network device in a wireless local area network, and the AP may be used to communicate with the STA through the wireless local area network.

From the perspective of the communication standard that is supported by the AP, in some implementations, the AP may be a device supporting the standard 802.11be. The AP may be a device that supports various current and future WLAN standards in the standard 802.11 family, which includes 802.11ax, 802.11ac, 802.11n, 802.11g, 802.11b, and 802.11a.

From the perspective of the communication standard that is supported by the STA, in some implementations, the non-AP STA may support the standard 802.11be. The non-AP STA may also support various current and future WLAN standards in the standard 802.11 family, which includes 802.11ax, 802.11ac, 802.11n, 802.11g, 802.11b, and 802.11a.

In the embodiments of the present disclosure, the supportable frequency bands in the WLAN technology are not limited. In some implementations, the supportable frequency bands in the WLAN technology may include, but are not limited to, low frequency bands (e.g., 2.4 GHz, 5 GHz and 6 GHz), and high frequency bands (e.g., 45 GHz and 60 GHz).

It is to be understood that the specific forms of the STA and the AP are not particularly limited in the embodiments of the present disclosure, and are merely for exemplary illustration herein.

## Relay-Based Communication

With the advancement of technologies, some communication standard projects (e.g., the next-generation Wi-Fi technology standard project Ultra-High Reliability (UHR)) have proposed a relay-based communication technology.

The relay-based communication technology can be implemented via relay nodes. A relay node may also be referred to as a relay entity, a relay device, a relay STA (rSTA), or simply a relay.

FIG. 2 is an example diagram of a relay node. As illustrated in FIG. 2, a direct link (indicated by a dashed line in FIG. 2) between a transmission STA (tSTA) (which may also be referred to as a source STA (sSTA)) and a destination STA may suffer from low signal-to-noise ratio (SNR). Consequently, in some cases, the direct link may be difficult to support an ideal modulation and coding scheme (MCS) or throughput. A relay station has good link quality to both the tSTA and the destination STA, enabling the rSTA to decode and retransmit a Physical Layer Protocol Data Unit (PPDU). Therefore, the relay station can extend the coverage of low-to-medium SNR regions and also increase throughput. Based on this, relay can improve the rate-vs-range (RvR) ratio.

Potential design requirements for the relay technology of some communication technologies (e.g., UHR) may include: improving multi-hop channel access delay (e.g., TXOP sharing enhancement); enhancing end-to-end quality of service (QoS) (e.g., end-to-end block acknowledge (BA)/acknowledge (ACK) protocol); simplifying the relay protocol to reduce relay processing complexity (e.g., single-user relay, simpler relay signaling, no encryption/decryption, reduced relay packet processing delay); and achieving low-cost design (e.g., enabling non-AP STA/AP to support relay (which is much simpler than multi-AP protocols)).

To facilitate understanding, relay-related terms are explained below.

### Relay Station

Some techniques propose that two types of relay STAs may be considered. The type of a relay STA can be distinguished according to whether the STA has AP functionality. A first-type relay STA may have AP functionality, i.e., can act as an AP and perform scheduling by itself. A second-type relay STA has no AP functionality and is scheduled by an AP, i.e., can act as a non-AP STA.

Characteristics of the first-type relay STA may include: flexible relay operation but higher complexity; ability to use the same or different operating channel widths; because the first-type relay STA may schedule independently, the relay STA needs a highly complex AP role to apply appropriate transmission parameters (orthogonal frequency division multiple access (OFDMA) scheduling, beamforming, etc.).

Characteristics of the second-type relay STA may include that: support for relay operation can be announced by

the AP through management frames such as beacon frames; the relay STA can be defined by its capabilities when associating with the AP; the relay STA may require new signaling design to compose transmit (TX) and receive (RX) parameters for relay operation.

## Relay Processing

In relay processing, two methods may be considered. The two methods are: amplify- and-forward (AF) and decode-and-forward (DF).

With AF, the relay STA can amplify the signal and forward it to the destination station. Therefore, AF is a very simple method. However, because the AP can also pass the amplified noise, AF may cause communication-performance degradation.

With DF, the received signal can be decoded, and the decoded signal can be reencoded for transmission. Due to demodulation/modulation and decoding/encoding operations, DF may have higher complexity and additional delay than AF. Therefore, DF is more suitable for transmissions that are less delay-sensitive. Nevertheless, DF can prevent performance degradation caused by inter-cell interference and noise amplification, and can improve signal quality through error correction. In addition, DF can adjust an appropriate per-channel MCS between the relay STA and the non-AP STA, thereby improving RvR.

## MAC-relay-based frame exchange

FIG. 3 is an example diagram of a MAC-relay-based frame exchange procedure.

In FIG. 3, relay-TXOP protection/sharing can be accomplished by exchanging MAC control frames (e.g., (MU-) request-to-send (RTS) / clear-to-send (CTS) frames) among the tSTA, the rSTA, and the destination station.

As illustrated in FIG. 3, the MAC-relay frame exchange procedure may include steps S310-S350.

S310: the tSTA may send a 1$^{st}$-hop frame to the rSTA.

S320: the rSTA may respond with a 1$^{st}$-hop BA frame (or ACK frame).

S330: after a MAC protocol data unit (MPDU) is successfully received in the first-hop frame, the rSTA may send a 2$^{nd}$-hop frame to the destination station.

S340: the destination station may send a 2$^{nd}$-hop BA frame (or ACK frame).

S350: the rSTA may send an end-to-end (E2E) BA frame (or ACK frame) to the tSTA.

Before step S310, frame exchange for relay TXOP protection may be performed among the tSTA, the rSTA, and the destination station.

## S1G Relay

Below, the S1G relay is taken as an example to describe relay-based communication technology.

S1G relay is a mechanism for extending the coverage of an AP, where the AP may be called a root AP. An S1G relay device includes an S1G relay AP and an S1G relay STA. The S1G relay STA is a non-AP STA that is associated with the root AP or with an S1G relay AP of another relay. The S1G relay AP is an AP that provides a relay function for its associated non-AP STAs and, via a path of the S1G relay STA, indirectly offers the root AP access to the DS. The relay function locally receives or selectively forwards MSDUs between the S1G relay STA and the S1G relay AP according to the destination address. The S1G relay device may forward frames between STAs associated with its S1G relay AP and APs associated with its S1G relay STA.

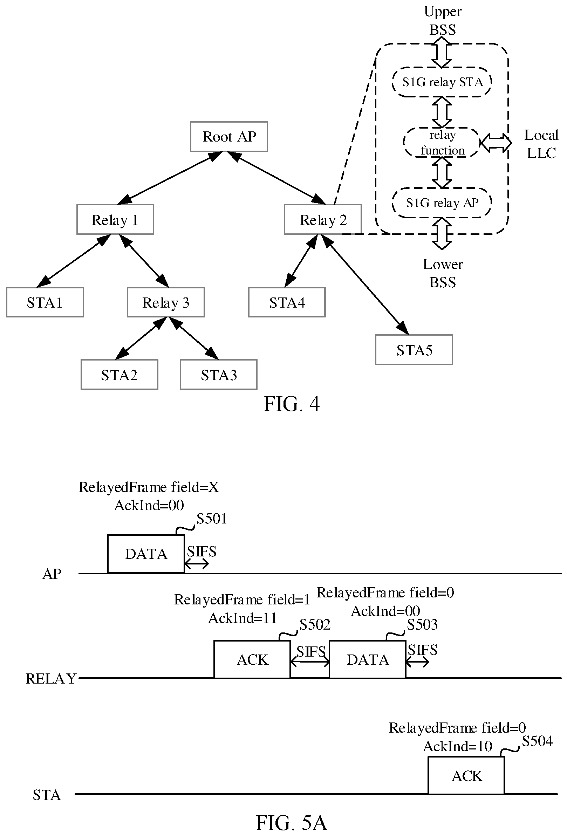

FIG. 4 is an example diagram of an S1G-relay architecture. As illustrated in FIG. 4, through relay 1, relay 2, and relay 3, the coverage of the root AP is extended, allowing the root AP to communicate with STA1, STA2, STA3, STA4, and STA5. Taking relay 2 as an S1G-relay device, relay 2 includes an S1G relay STA and an S1G relay AP. The S1G relay STA and the S1G relay AP interact via the relay function. The relay function may be implemented through local logical-link control (LLC). The S1G relay STA belongs to the upper (or uplink) BSS. The S1G relay AP belongs to the lower (or downlink) BSS.

## TXOP Sharing in S1G Relay

If, during a TXOP, the S1G relay STA and the S1G relay AP operate on different primary channels, the S1G-relay device shall not perform TXOP sharing. An S1G-relay device that performs TXOP sharing shall use a channel width equal to or narrower than a channel width indicated by the STA that initiated the TXOP. During the relay-shared TXOP, frame sequences exchanged on the first and second hops depend on the ACK procedure used by the S1G relay.

When an S1G relay (S1G relay STA or S1G relay AP) receives a valid PV1 QoS data frame and a relayed frame field in a frame control field equals 1, the S1G relay may acknowledge the received PV1 QoS data frame by using either an

implicit or explicit ACK procedure. If, in the received PV1 QoS data frame, the relayed frame field in the frame control field equals 0, the S1G relay will not use the implicit or the explicit ACK procedure to acknowledge the received PV1 QoS data frame.

To initiate a relay-shared TXOP, a non-AP STA may send to the S1G relay AP a PV1 QoS data frame with the relayed frame field set to 1. Alternatively, an AP may send to the S1G relay STA a PV1 QoS data frame with the relayed frame field set to 1. To use the explicit-ACK procedure, the S1G relay AP or S1G relay STA addressed by an RTS frame shall respond with an NDP CTS frame in which a duration field is set according to the relay-shared-TXOP protection mechanism.

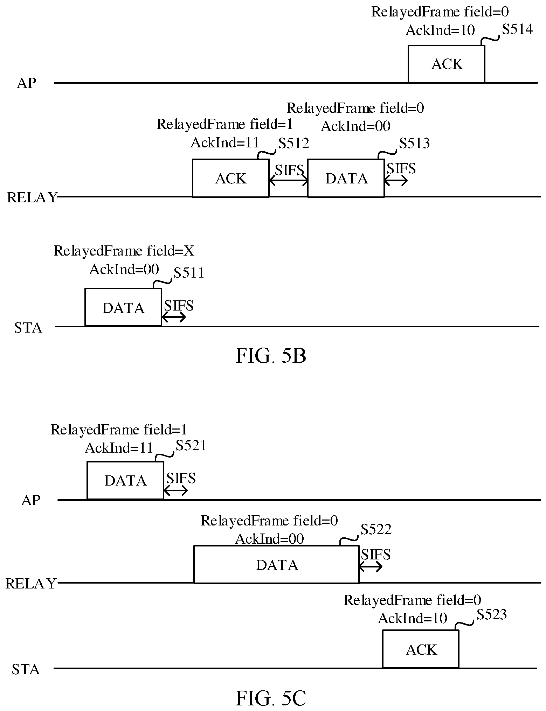

In the following, the explicit ACK procedure is described in conjunction with FIGS. 5A and 5B.

FIG. 5A is an example diagram of a downlink relay transmission procedure based on explicit acknowledgment. The method illustrated in FIG. 5A may include steps S501 to S504.

Step S501: the AP sends a downlink data frame.

The downlink data frame may be a PV1 QoS data frame. In the downlink data frame, the relayed frame field is set to X and the ACK-indication bit (ACKInd) is set to 00, thereby enabling relay transmission of the data frame.

Step S502: the S1G relay STA sends an NDP ACK frame to the AP. The S1G relay AP or the S1G relay STA may also set the ACKInd to 11 for the next frame to be transmitted.

In the data frame sent in step S503, the relayed frame field is set to 0.

Step S503: after a short interframe space (SIFS) time following step S502, the S1G relay AP forwards the downlink data frame received in step S501 to the STA. In addition, the S1G relay AP may protect the forwarded data frame by using a protection mechanism such as RTS/CTS exchange.

The S1G relay AP may transmit data with different MCSs and set the ACK-indication bit to 00. Data with different MCSs may be sent multiple times through a relay-buffered frame until successful transmission or the retry limit is reached.

Step S504: after receiving the data frame sent in step S503, the STA sends an NDP ACK frame to the S1G relay AP.

The S1G relay STA shall issue a no-response response indication to terminate the relay-shared TXOP.

FIG. 5B is an example diagram of an uplink relay-transmission procedure based on explicit acknowledgment. The method illustrated in FIG. 5B may include steps S511 to S514.

Step S511: the STA sends an uplink data frame.

The uplink data frame may be a PV1 QoS data frame. In the uplink data frame, the relayed frame field is set to X and the ACK-indication bit is set to 00, thereby enabling relayed transmission of the data frame.

Step S512: the S1G relay AP sends an NDP ACK frame to the STA. The S1G relay AP or the S1G relay STA may also set the ACK-indication bit to 11 for the next frame to be transmitted.

Step S513: after a SIFS time following step S512, the S1G relay STA forwards the uplink data frame received in step S511 to the AP. In addition, the S1G relay STA may protect the forwarded data frame by using a protection mechanism such as RTS/CTS exchange.

The S1G relay STA may transmit data with different MCSs and set the ACK-indication bit to 00. Data with different MCSs may be sent multiple times through a relay-buffered frame until successful transmission or the retry limit is reached.

In the data frame sent in step S513, the relayed frame field is set to 0.

Step S514: after receiving the data frame sent in step S513, the AP sends an NDP ACK frame to the S1G relay AP.

After receiving the ACK, the STA may delete the data frame from its buffer and defer for MAX_PPDU + ACK + 2 × SIFS before the next event, where MAX_PPDU is the maximum duration of a PPDU, ACK is the duration of an ACK frame, and SIFS is the duration of a SIFS.

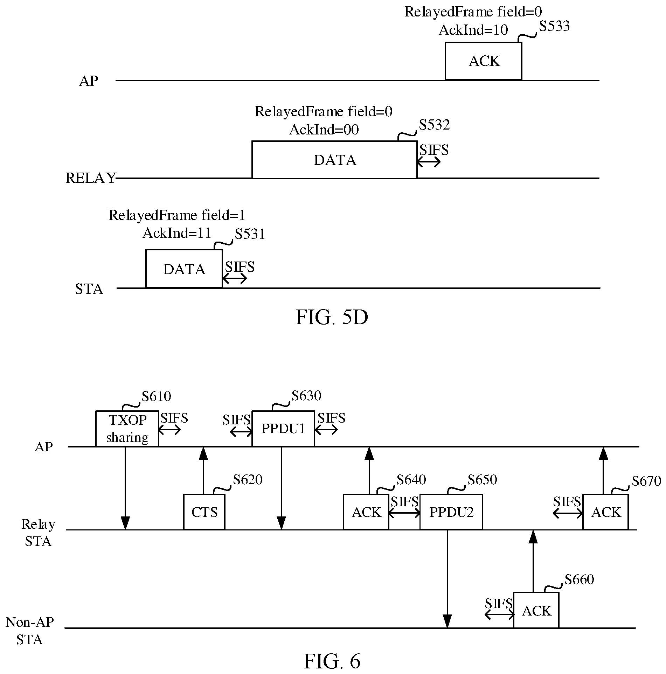

In the following, the implicit ACK procedure is described in conjunction with FIGS. 5C and 5D.

FIG. 5C is an example diagram of a downlink relay-transmission procedure based on implicit acknowledgment. The method illustrated in FIG. 5C may include steps S521 to S523.

Step S521: the AP sends a downlink data frame.

The downlink data frame may be a PV1 QoS data frame. In the downlink data frame, the relayed frame field is set to 1 and the ACK-indication bit is set to 11, thereby enabling relayed transmission of the data frame. With the ACK-indication bit set to 11, other STAs may expect that another data frame will follow.

Step S522: as the intended recipient of the S1G RTS frame, the S1G relay (S1G relay STA or S1G relay AP) shall respond with an NDP CTS frame that carries a duration field if the S1G relay intends to use the implicit ACK procedure, so as to satisfy the provisions of the relay-shared-TXOP protection mechanism. When the S1G relay receives the PV1 QoS data frame during the relay-shared TXOP, the S1G relay may directly forward the received frame without sending an acknowledgment frame back to the sender of that frame. If the PV1 QoS data frame is preceded by an RTS frame, the S1G relay shall, in accordance with the relay-shared-TXOP protection mechanism, protect the forwarded frame by sending an RTS frame to the intended recipient.

The S1G relay may transmit data with different MCSs and set the ACK-indication bit to 00. Data with different MCSs may be sent multiple times through a relay-buffered frame until successful transmission or the retry limit is reached.

In the data frame sent in step S522, the relayed frame field is set to 0.

Step S523: after the STA receives the data frame, the STA feeds back an ACK frame. In the ACK frame, the relayed frame field may be set to 0 and the ACK-indication bit may be set to 10.

FIG. 5D is an example diagram of an uplink relay-transmission procedure based on implicit acknowledgment. The method illustrated in FIG. 5D may include steps S531 to S533.

Step S531: the STA sends an uplink data frame.

The uplink data frame may be a PV1 QoS data frame. In the uplink data frame, the relayed frame field is set to 1 and the ACK-indication bit is set to 11, thereby enabling relayed transmission of the data frame. With the ACK-indication bit set to 11, other STAs may expect that another data frame will follow.

Within a SIFS time after step S531, the STA receives a physical-layer (PHY) SIG field with ACK-indication bit set to 00 and checks a next-hop partial association identifier (PAID) in the PHY-SIG field.

Step S532: as the intended recipient of the S1G RTS frame, the S1G relay (S1G relay STA or S1G relay AP) shall respond with an NDP CTS frame that carries a duration field if the S1G relay intends to use the implicit-ACK procedure, so as to satisfy the provisions of the relay-shared-TXOP protection mechanism. When the S1G relay receives the PV1 QoS data frame during the relay-shared TXOP, the S1G relay may directly forward the received frame without sending an acknowledgment frame back to the sender of that frame. If the PV1 QoS data frame is preceded by an RTS frame, the S1G relay shall, in accordance with the relay-shared-TXOP protection mechanism, protect the forwarded frame by sending an RTS frame to the intended recipient.

The S1G relay may transmit data with different MCSs and set the ACK-indication bit to 00. Data with different MCSs may be sent multiple times through a relay-buffered frame until successful transmission or the retry limit is reached.

In the data frame sent in step S532, the relayed frame field is set to 0.

Step S523: after the STA receives the data frame, the STA feeds back an ACK frame. In the ACK frame, the relayed frame field may be set to 0 and the ACK-indication bit may be set to 10.

TXS-based relay operation

To accommodate the two different transmissions from AP to relay STA and from relay STA to non-AP STA, the establishment and sharing of a relay-based TXOP may be considered.

It should be noted that channel states of the two transmissions from AP to relay STA and from relay STA to non-AP STA are different. Therefore, in order to transmit effectively, conditions of respective channels should be measured.

The TXOP for relay transmission may be set taking all transmissions into account, or may be set taking only certain transmissions into account. For example, the TXOP for relay transmission may be set for the transmission from relay STA to non-AP STA.

TXOP sharing is performed by the AP; to this end, reuse of a trigger-based TXOP-sharing (TXS) procedure may be considered. That is, the TXOP for relay operation may be shared by means of a TXS trigger frame. An example of such a TXS-trigger frame is an MU-RTS TXS trigger frame.

FIG. 6 is an example diagram of a trigger-based TXOP-sharing procedure.

Step S610: the AP sends a TXOP sharing trigger frame to the relay STA.

Step S620: the relay STA sends a CTS.

Step S630: the AP sends PPDU1 to the relay STA.

Step S640: the relay STA feeds back an ACK frame for PPDU1.

Step S650: the relay STA sends PPDU2 to the non-AP STA.

Step S660: the non-AP STA feeds back an ACK frame for PPDU2 to the relay STA.

Step S670: after receiving the ACK frame in Step S660, the relay STA feeds back an ACK frame to the AP.

For relay-based TXOP sharing, how to synchronize the states of operating-channel of the BSSs where the sSTA, the relay, and the destination station reside is the key to achieving relay-based TXOP sharing between the sSTA and the destination station.

For example, an operating channel of an operating link between the TXOP initiator (e.g., sSTA) and the relay, and an operating channel of an working link between the relay and the TXOP responder (e.g., destination station), may be different. Therefore, in order to realize TXOP sharing, synchronization of the states of the different operating channels is required. On the other hand, even if the operating channels are the same, because the distance between the tSTA and the destination station may be large, the OBSS environments in which the tSTA, the destination station, and the relay are located may differ significantly. In addition, communication between a non-AP STA acting as the sSTA or destination station and the relay should use transmit power appropriate to the communication distance between them, so the hidden-node problem is more likely to arise, causing collisions for some stations.

However, the related art has not proposed any technical solution for synchronizing the states of operating channels of the BSSs in which the sSTA, the relay, and the destination station reside.

The embodiments of the present disclosure propose the wireless-communication methods illustrated in FIGS.

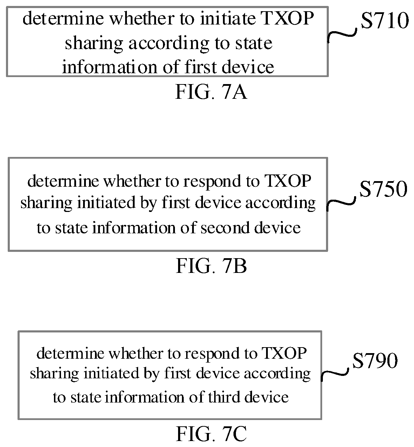

7A-7C to solve the above problems. The method illustrated in FIG. 7A may be performed by a first device; the method illustrated in FIG. 7B may be performed by a second device; the method illustrated in FIG. 7C may be performed by a relay device. First, the first device, the second device, and the relay device mentioned in the embodiments of the present disclosure are explained.

The communication architecture proposed in the present disclosure is implemented on the basis of a relay device. By means of the relay device, communication between the first device and the second device can be realized. This communication may include relay-based signal and data exchange. In some embodiments, the first device may include a tSTA, and the second device may include a destination station. Alternatively, the first device may include a destination station, and the second device may include a tSTA.

In some embodiments, the first device may be a TXOP holder.

Both the first device and the second device may be connected to the relay device. Here, "connected" may mean connected through a wireless medium (WM), or may mean able to communicate via a link. For example, the relay device may be connected to the first device through a WM on a first link, and may be connected to the second device through a WM on a second link. For another example, the relay device may be connected to the first device on the first link through a P2P link via a WM, and the first device may include a P2P peer. In a case that the first device includes a device that provides distribution system services (DSS) access (e.g., a root AP), the P2P peer may be associated with the device that provides DSS access. For another example, the relay device may be connected to the second device on the second link through a P2P link via a WM, and the second device may include a P2P peer. For another example, the first device may communicate with the relay device through a link, and the second device may communicate with the relay device through a link.

The first device may include a device that provides DSS access. The device that provides DSS access may be an AP, which may be called a root AP, i.e., the root AP may provide distributed DSS access. In this case, the first link may be called the uplink (uLink), and the second link may be called the downlink (dLink). In this case, the first device may be called a puSTA, and the second device may be called a pdSTA.

The second device may include a device that provides DSS access. In this case, the second link may be called the uplink (uLink), and the first link may be called the downlink (dLink). In this case, the second device may be called a puSTA, and the first device may be called a pdSTA.

It should be noted that the first link and the second link may operate on operating channels in the same or different frequency bands. The first link and the second link may adopt the same or different operating parameters.

A third device may belong to the relay device. The relay device may have one or more STAs affiliated with it. The one or more STAs may include the third device. Illustratively, the relay device may have at least two STAs affiliated with it. Two of the at least two STAs may correspond to the first link and the second link, respectively. For example, the two STAs affiliated with the relay device may correspond to the uplink and the downlink, respectively. The STA connected to the puSTA via the uplink may be called an uplink STA (uSTA), and the STA connected to the pdSTA via the downlink may be called a downlink STA (dSTA). Both uSTA and dSTA may be non-AP STAs. Alternatively, one of uSTA and dSTA may be an AP and the other may be a non-AP STA. Illustratively, one of uSTA and dSTA may be an S1G relay AP and the other may be an S1G relay STA. The third device may be the uSTA, and the dSTA may be called a fourth device. Alternatively, the third device may be the dSTA, and the uSTA may be called a fourth device.

It can be understood that, when the relay device has only one affiliated STA, the first link and the second link may be the same link. That is, the single STA of the relay device is connected to both the puSTA and the pdSTA via the same link. In this case, the same link may be called either the first link or the second link, and the single STA may be represented as either a uSTA or a dSTA.

Based on the above architecture, in some embodiments, the first device may include a puSTA, a pdSTA, an sSTA, or a tSTA; the second device may include a puSTA, a pdSTA, or a destination station; and the third device may include a uSTA or a dSTA affiliated with the relay device.

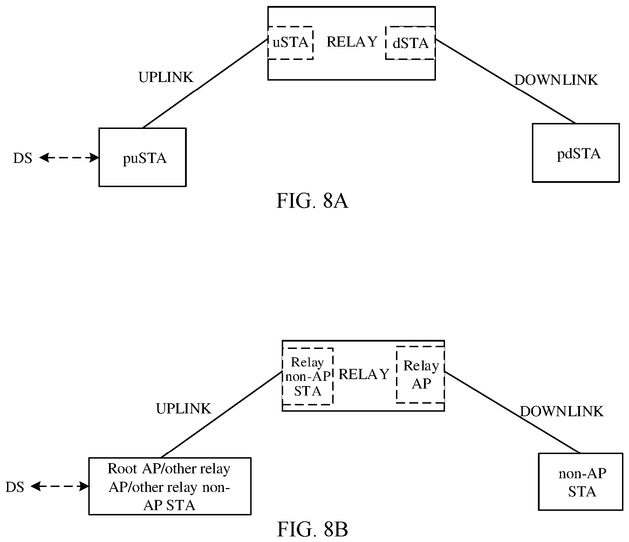

In the following, a relay device applicable to the embodiments of the present disclosure are illustrated with reference to FIGS. 8A to 8C.

The type or operation mode of the relay device proposed in the present disclosure may be as illustrated in FIG. 8A. The relay device illustrated in FIG. 8A has two affiliated stations, which correspond to the uplink and the downlink, respectively. The two stations affiliated with the relay device are a uSTA and a dSTA. The uSTA may connect to its associated root AP through the WM on the uplink, or may connect through a P2P link to a P2P peer on the uplink. The P2P peer is associated with a root AP that provides DSS access. Let the AP or P2P peer with which the uSTA is associated be denoted as the puSTA (i.e., the peer STA of the uSTA on the uplink). The puSTA may communicate with a distribution system (DS) directly or indirectly. The dSTA may, by implementing AP functions, connect to its associated stations through the WM on the downlink, or may act as a P2P site and connect through a P2P link to a P2P peer on the downlink. Let the station or P2P peer with which the dSTA is associated be denoted as the pdSTA (i.e., the peer STA of the dSTA on the downlink). Thus, the relay device provides relay functionality to enable communication and data exchange between the puSTA and the pdSTA.

FIG. 8B is one implementation of FIG. 8A. In FIG. 8B, the uSTA is a relay non-AP STA and the dSTA is a relay AP.

The puSTA may be a root AP, another relay AP, or another relay non-AP STA, where the root AP or another relay AP may associate with the uSTA, and another relay non-AP STA may communicate with the uSTA through a P2P link. The pdSTA may be a non-AP STA associated with the dSTA.

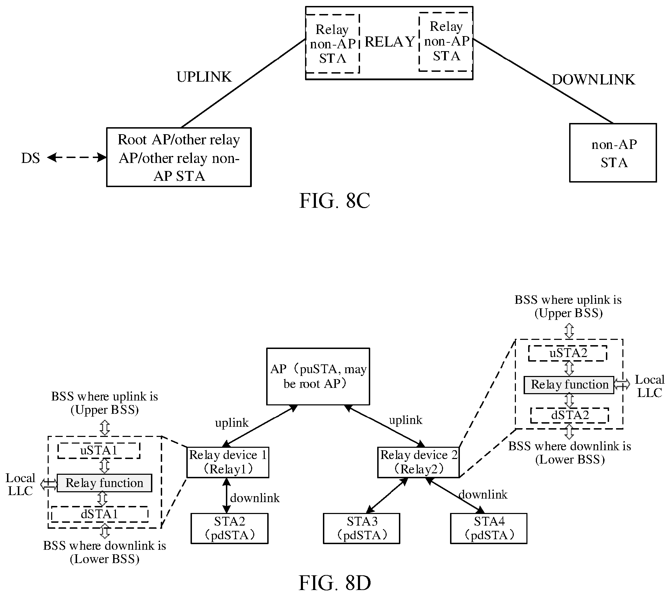

FIG. 8C is another implementation of FIG. 8A. In FIG. 8C, both the uSTA and the dSTA are relay non-AP STAs. The puSTA may be a root AP, another relay AP, or another relay non-AP STA, where the root AP or another relay AP may associate with the uSTA, and another relay non-AP STA may communicate with the uSTA through a P2P link. The pdSTA may be a non-AP STA that communicates with the dSTA through a P2P link.

FIG. 8D is an example diagram of a relay architecture based on the relay devices illustrated in FIGS. 8A to 8C.

As illustrated in FIG. 8D, both relay device 1 (relay1) and relay device 2 (relay2) may be the relay devices illustrated in FIGS. 8A to 8C.

Relay device 1 may have uSTA1 and dSTA1 affiliated with it. uSTA1 may be a relay STA, and dSTA1 may be a non-AP STA. Relay device 1 may connect to an AP through the uplink, where the AP is the puSTA, which may be a root AP). Relay device 1 may connect to STA2 through the downlink, where STA2 is the pdSTA.

Relay device 2 may be have uSTA2 and dSTA2 affiliated with it. uSTA2 and dSTA2 are affiliated with relay device 2 through the relay function. uSTA2 may be a non-AP STA. For example, uSTA2 may be a relay STA. dSTA2 may be an AP. For example, dSTA2 may be a relay AP. Relay device 2 may connect to an AP through the uplink. That is, the AP is the puSTA, which may be a root AP. Relay device 2 may connect to STA3 and STA4 through the downlink. That is, both STA3 and STA4 are pdSTAs.

In FIG. 8D, the first device may include the AP, the second device may include STA2, STA3, or STA4, and the third device may include one or two of uSTA1, uSTA2, dSTA1, and dSTA2.

As can be seen from the architecture illustrated in any of FIGS. 8A to 8D, for a relay device or a device that enters a relay-operation mode, the device may access the DS by associating with an AP device through the uplink or by connecting through a P2P link to a station that is itself associated with an AP device, and may connect to other non-AP STAs through the downlink (either by having non-AP STAs associate with the relay or by establishing P2P links between non-AP STAs and the relay).

Based on the above architecture, the methods illustrated in FIGS. 7A to 7C are detailed below.

The method illustrated in FIG. 7A may include step S710; the method illustrated in FIG. 7B may include step S750; the method illustrated in FIG. 7C may include step S790.

Step S710: the first device determines, according to state information of the first device, whether to initiate TXOP sharing or to initiate a frame exchange with the second device.

Step S750: the second device determines, according to state information of the second device, whether to respond to the TXOP sharing or to initiate a frame exchange with the first device.

Step S790: the relay device determines, according to state information of the third device, whether to respond to the TXOP sharing or to respond to the frame exchange between the first device and the second device.

It can be understood that the methods illustrated in FIGS. 7A to 7C may be applied in a scenario where the first device and the second device communicate via the relay device. Therefore, the TXOP sharing may be relay-based TXOP sharing. The first device may be the TXOP holder, and thus can initiate the TXOP sharing. The second device can respond to the TXOP sharing or initiate a frame exchange with the first device for communication. The relay device can respond to the TXOP sharing or respond to the frame exchange between the first device and the second device, thereby realizing the relay function.

One or more of the first device, the second device, and the third device may maintain their own state information. According to its own state information, the corresponding device can determine whether to initiate or respond to TXOP sharing, or to initiate or respond to frame exchange between the first device and the second device.

The state information may relate to predicted duration information of future media traffic generated due to frame transmission by stations within one or more BSSs. For example, the value of the state information may include a predicted duration of the future media traffic caused by frame transmission of stations within one or more BSSs.

The state information of the first device may indicate one or more of the following: first state information, second state information, and third state information. Each is described below.

The first state information may be used to indicate predicted duration information of future media traffic generated due to frame transmission by a station within the first BSS. The first BSS may be the BSS in which the link between the first device and the relay device is located.

The first device may determine the idle/busy state of the first BSS according to the value of the first state information. That is, the first state information may indicate whether the first BSS is idle or busy. For example, when the first state information is non-zero, the predicted duration of future media traffic generated due to frame transmission by stations inside the first BSS is non-zero, so the first state information may indicate that the first BSS is busy during that duration. For another example, when the first state information is zero, the predicted duration of future media traffic generated due to frame transmission by stations inside the first BSS is zero, so the first state information may indicate that the first BSS is possibly idle. In this case, the first device may further determine whether the first BSS is idle according to another indicator.

In some embodiments, the first state information may be updated by a PPDU inside the BSS in which the first device is located.

The second state information may be used to indicate predicted duration information of future media traffic generated due to frame transmission by a station within the relay BSS. It should be noted that a BSS where the uplink of the relay is located is called a relay BSS for a BSS where the downlink of the relay is located, and the BSS where the downlink of the relay is located is called a relay BSS for the BSS where the uplink of the relay is located. The relay BSS of the first device may be the BSS in which the link between the relay device and the second device is located, i.e., the relay BSS of the first device may be the BSS where the downlink is located.

The first device may determine the idle/busy state of the relay BSS according to the value of the second state information. That is, the second state information may indicate whether the relay BSS is idle or busy. For example, when the second state information is non-zero, the predicted duration of future media traffic generated due to frame transmission within the relay BSS is non-zero, so the second state information may indicate that the relay BSS is busy during that duration. For another example, when the second state information is zero, the predicted duration of future media traffic generated due to frame transmission within the relay BSS is zero, so the second state information may indicate that the relay BSS is possibly idle. In this case, the first device may further determine whether the relay BSS is idle according to another indicator.

In some embodiments, the second state information may be updated by a PPDU inside the relay BSS.

The third state information may be used to indicate predicted duration information of future media traffic generated due to frame transmission by a station within an overlapping basic service set (OBSS), in which the first device is located, except the first BSS and the relay BSS. Descriptions of the relay BSS and the first BSS are as above and are not repeated here.

The first device may determine the idle/busy state of the OBSS except the relay BSS according to the value of the third state information. That is, the third state information may indicate whether the OBSS except the relay BSS is idle or busy. For example, when the third state information is non-zero, a predicted duration of the future media traffic generated due to frame transmission by a station within the OBSS except the relay BSS is non-zero, so the third state information may indicate that the OBSS is busy during that duration. For another example, when the third state information is zero, the predicted duration of the future media traffic generated due to frame transmission by a station within the OBSS except the relay BSS is zero, so the third state information may indicate that the OBSS is possibly idle. In this case, the first device may further determine whether the OBSS except the relay BSS is idle according to another indicator.

In some embodiments, the third state information may be updated by an inter-BSS PPDU except a PPDU inside the relay BSS.

Thus, according to the state information of the first device, the first device can obtain predicted duration information of future media traffic related to BSSs involved in relay-based communication, thereby synchronizing the states of operating channel of the BSSs in which the various devices are located and determining whether to initiate TXOP sharing or to initiate frame exchange with the second device.

The state information of the second device may indicate one or more of the following: fourth state information, fifth state information, and sixth state information. Each is described below.

The fourth state information may be used to indicate predicted duration information of future media traffic generated due to frame transmission by a station within the second BSS. The second BSS may be the BSS in which the link between the second device and the relay device is located.

The second device may determine the idle/busy state of the second BSS according to the value of the fourth state information. That is, the fourth state information may indicate whether the second BSS is idle or busy. For example, when the fourth state information is non-zero, the predicted duration of future media traffic generated due to frame transmission by stations inside the second BSS is non-zero, so the fourth state information may indicate that the second BSS is busy during that duration. For another example, when the fourth state information is zero, the predicted duration of future media traffic generated due to frame transmission by stations inside the second BSS is zero, so the fourth state information may indicate that the second BSS is possibly idle. In this case, the second device may further determine whether the second BSS is idle according to another indicator.

In some embodiments, the fourth state information may be updated by a PPDU inside the BSS in which the second device is located.

The fifth state information may be used to indicate predicted duration information of future media traffic generated due to frame transmission by a station within the relay BSS. The relay BSS of the second device may be the BSS in which the link between the first device and the relay device is located. That is to say, the relay BSS of the second device may be the BSS where the uplink is located.

The second device may determine the idle/busy state of the relay BSS according to the value of the fifth state information. That is, the fifth state information may indicate whether the relay BSS is idle or busy. For example, when the fifth state information is non-zero, the predicted duration of future media traffic generated due to frame transmission within the relay BSS is non-zero, so the fifth state information may indicate that the relay BSS is busy during that duration. For

another example, when the fifth state information is zero, the predicted duration of future media traffic generated due to frame transmission within the relay BSS is zero, so the fifth state information may indicate that the relay BSS is possibly idle. In this case, the second device may further determine whether the relay BSS is idle according to another indicator.

In some embodiments, the fifth state information may be updated by a PPDU inside the relay BSS.

The sixth state information may be used to indicate predicted duration information of future media traffic generated due to frame transmission by a station within an OBSS, in which the second device is located, except the second BSS and the relay BSS. Descriptions of the relay BSS and the second BSS are as above and are not repeated here.

The second device may determine the idle/busy state of the OBSS except the relay BSS according to the value of the sixth state information. That is, the sixth state information may indicate whether the OBSS except the relay BSS is idle or busy. For example, when the sixth state information is non-zero, a predicted duration of the future media traffic generated due to frame transmission by a station within the OBSS except the relay BSS is non-zero, so the sixth state information may indicate that the OBSS is busy during that duration. For another example, when the sixth state information is zero, the predicted duration of the future media traffic generated due to frame transmission by a station within the OBSS except the relay BSS is zero, so the sixth state information may indicate that the OBSS is possibly idle. In this case, the second device may further determine whether the OBSS except the relay BSS is idle according to another indicator.

In some embodiments, the sixth state information may be updated by an inter-BSS PPDU except a PPDU inside the relay BSS.

Thus, according to the state information of the second device, the second device can obtain predicted duration information of future media traffic related to BSSs involved in relay-based communication, thereby determining whether to respond to TXOP sharing or initiate frame exchange with the first device, and thus avoiding anomalies in relay-based TXOP sharing.

The state information of the third device may indicate one or more of the following: seventh state information, eighth state information, and ninth state information. Each is described below.

The seventh state information may be used to indicate predicted duration information of future media traffic generated due to frame transmission by a station within the third BSS. When the third device communicates with the first device via a link, a BSS where the link between the third device and the first device is located is the third BSS, and a BSS where the link between the relay device and the second device is located is the relay BSS. When the third device communicates with the second device via a link, the BSS where the link between the third device and the second device is located is the third BSS, and the BSS where the link between the relay device and the first device is located is the relay BSS.

The third device or the relay device may determine the idle/busy state of the third BSS according to the value of the seventh state information. That is, the seventh state information may indicate whether the third BSS is idle or busy. For example, when the seventh state information is non-zero, the predicted duration of future media traffic generated due to frame transmission by stations inside the third BSS is non-zero, so the seventh state information may indicate that the third BSS is busy during that duration. For another example, when the seventh state information is zero, the predicted duration of future media traffic generated due to frame transmission by stations inside the third BSS is zero, so the seventh state information may indicate that the third BSS is possibly idle. In this case, the third device may further determine whether the third BSS is idle according to another indicator.

In some embodiments, the seventh state information may be updated by a PPDU inside the BSS in which the third device is located.

The eighth state information may be used to indicate predicted duration information of future media traffic generated due to frame transmission by a station within the relay BSS. The BSS where the uplink of the relay device is located may be the relay BSS for the BSS where the downlink is located; and the BSS where the downlink is located may be the relay BSS for the BSS where the uplink is located.

For example, when the third device includes an uSTA, the BSS where the downlink is located may be the relay BSS of the third device. When the third device includes a dSTA, the BSS where the uplink is located may be the relay BSS of the third device.

The third device or the relay device may determine the idle/busy state of the relay BSS according to the value of the eighth state information. That is, the eighth state information may indicate whether the relay BSS is idle or busy. For example, when the eighth state information is non-zero, the predicted duration of future media traffic generated due to frame transmission within the relay BSS is non-zero, so the eighth state information may indicate that the relay BSS is busy during that duration. For another example, when the eighth state information is zero, the predicted duration of future media traffic generated due to frame transmission within the relay BSS is zero, so the eighth state information may indicate that the relay BSS is possibly idle. In this case, the third device may further determine whether the relay BSS is idle according to another indicator.

In some embodiments, the eighth state information may be updated by a PPDU inside the relay BSS.

The ninth state information may be used to indicate predicted duration information of future media traffic generated due to frame transmission by a station within an OBSS, in which the third device is located, except the third BSS and the relay BSS. Descriptions of the relay BSS and the third BSS are as above and are not repeated here.

The third device or the relay device may determine the idle/busy state of the OBSS except the relay BSS according to the value of the ninth state information. That is, the ninth state information may indicate whether the OBSS except the relay BSS is idle or busy. For example, when the ninth state information is non-zero, a predicted duration of the future media traffic generated due to frame transmission by a station within the OBSS except the relay BSS is non-zero, so the ninth state information may indicate that the OBSS is busy during that duration. For another example, when the ninth state information is zero, the predicted duration of the future media traffic generated due to frame transmission by a station within the OBSS except the relay BSS is zero, so the ninth state information may indicate that the OBSS is possibly idle. In this case, the third device may further determine whether the OBSS except the relay BSS is idle according to another indicator.

In some embodiments, the ninth state information may be updated by an inter-BSS PPDU except a PPDU inside the relay BSS.

Thus, according to the state information of the third device, the relay device can obtain predicted duration information of future media traffic related to BSSs involved in relay-based communication, thereby determining whether to respond to TXOP sharing or respond to frame exchange between the first device and the second device, and thus avoiding anomalies in relay-based TXOP sharing.

As can be seen from the above, the relay device may have multiple affiliated STAs. For example, not only the third device but also a fourth device may be affiliated with the relay device. In this case, the relay device may further determine whether to respond to TXOP sharing or to respond to frame exchange between the first device and the second device according to the state information of the fourth device.

Illustratively, the third device communicates with the first device via a link, the fourth device communicates with the second device via a link, a BSS in which the link between the fourth device and the second device is located is a fourth BSS, and a BSS in which the link between the relay device and the first device is located is a fifth BSS. The state information of the fourth device may include one or more of the following: tenth state information, eleventh state information, and twelfth state information. The tenth state information may be used to indicate predicted duration information of future media traffic generated due to frame transmission by a station within the fourth BSS. The eleventh state information may be used to indicate predicted duration information of future media traffic generated due to frame transmission by a station within the fifth BSS. The twelfth state information may be used to indicate predicted duration information of future media traffic generated due to frame transmission by a station within the OBSS, in which the fourth device is located, except the fourth BSS and the fifth BSS.

It can be understood that the fifth BSS is the relay BSS of the fourth device.

The fourth device or the relay device may determine the idle/busy state of the fourth BSS according to the value of the tenth state information. That is, the tenth state information may indicate whether the fourth BSS is idle or busy. For example, when the tenth state information is non-zero, the predicted duration of future media traffic generated due to frame transmission by stations inside the fourth BSS is non-zero, so the tenth state information may indicate that the fourth BSS is busy during that duration. For another example, when the tenth state information is zero, the predicted duration of future media traffic generated due to frame transmission by stations inside the fourth BSS is zero, so the tenth state information may indicate that the fourth BSS is possibly idle. In this case, the fourth device may further determine whether the fourth BSS is idle according to another indicator.

In some embodiments, the tenth state information may be updated by a PPDU inside the BSS in which the fourth device is located.

The fourth device or the relay device may determine the idle/busy state of the fifth BSS according to the value of the eleventh state information. That is, the eleventh state information may indicate whether the fifth BSS is idle or busy. For example, when the eleventh state information is non-zero, the predicted duration of future media traffic generated due to frame transmission by stations inside the fifth BSS is non-zero, so the eleventh state information may indicate that the fifth BSS is busy during that duration. For another example, when the eleventh state information is zero, the predicted duration of future media traffic generated due to frame transmission by stations inside the fifth BSS is zero, so the eleventh state information may indicate that the fifth BSS is possibly idle. In this case, the fourth device may further determine whether the fifth BSS is idle according to another indicator.

In some embodiments, the eleventh state information may be updated by a PPDU inside the fifth BSS.

The fourth device or the relay device may determine the idle/busy state of the OBSS except the fifth BSS according to the value of the twelfth state information. That is, the twelfth state information may indicate whether the OBSS except the fifth BSS is idle or busy. For example, when the twelfth state information is non-zero, a predicted duration of the future media traffic generated due to frame transmission by a station within the OBSS except the fifth BSS is non-zero, so the twelfth state information may indicate that the OBSS is busy during that duration. For another example, when the twelfth state information is zero, the predicted duration of the future media traffic generated due to frame transmission by a station within the OBSS except the fifth BSS is zero, so the twelfth state information may indicate that the OBSS is possibly idle. In this case, the fourth device or the relay device may further determine whether the OBSS except the fifth BSS is idle according to another indicator.

In some embodiments, the twelfth state information may be updated by an inter-BSS PPDU except a PPDU inside the fifth BSS.

In conjunction with steps S710, S750, and S790, it can be seen that in some embodiments, if the BSS in which a device is located is referred to as an internal BSS, then the state information may include internal state information related to the internal BSS of the device. The internal state information may be used to indicate the predicted duration information of future media traffic generated due to frame transmission of stations inside the internal BSS. The first state information may be the internal state information of the first device, the fourth state information may be the internal state information of the second device, the seventh state information may be the internal state information of the third device, and the tenth state information may be the internal state information of the fourth device.

In some embodiments, the state information may include relay state information related to the relay BSS of the device. When the device is connected via the first link, the relay BSS may be the BSS in which the second link is located. When the device is connected via the second link, the relay BSS may be the BSS in which the first link is located. The relay state information may be used to indicate predicted duration information of future media traffic generated due to frame transmission of stations inside the relay BSS. The second state information may be the relay state information of the first device, the fifth state information may be the relay state information of the second device, the eighth state information may be the relay state information of the third device, and the eleventh state information may be the relay state information of the fourth device.

In some embodiments, the state information may include OBSS-except-relay state information related to the OBSS of the device excluding the relay BSS. The OBSS-except-relay state information may be used to indicate predicted duration information of future media traffic generated due to frame transmission of stations inside the OBSS excluding the relay BSS. The third state information may be the OBSS-except-relay state information of the first device, the sixth state information may be the OBSS-except-relay state information of the second device, the ninth state information may be the OBSS-except-relay state information of the third device, and the twelfth state information may be the OBSS-except-relay state information of the fourth device.

It should be noted that, in relay-based communication, if the uplink and the downlink operate on overlapping operating channels, then on the overlapping operating channels, one or more of the first device, the second device, the third device, and the fourth device may maintain their respective state information. That is, if the uplink and the downlink operate on nonoverlapping operating channels, then the first device, the second device, the third device, or the fourth device may not maintain state information.

It should be noted that, for multiple operating channels or multiple sets of operating channels, the first device, the second device, the third device, or the fourth device may maintain multiple pieces of state information. The multiple pieces of state information may correspond one-to-one with the multiple operating channels or multiple sets of operating channels. Alternatively, the first device, the second device, the third device, or the fourth device may uniformly maintain a single piece of state information. The single piece of state information may uniformly indicate the multiple operating channels or multiple sets of operating channels.

It should be noted that, in a case that a certain device (the first device, the second device, the third device, or the fourth device) maintains multiple pieces of state information, "state information is non-zero" may mean that "any one of the multiple pieces of state information is non-zero," and "state information is zero" may mean that "all of the multiple pieces of state information are zero."

In some embodiments, the state information may be indicated by a network allocation vector (NAV). That is, the state information may be implemented based on the NAV mechanism, and the value of the state information may be the timing value of a NAV timer. The internal state information may be indicated by an intra-BSS NAV. The relay state information may be indicated by a relay-BSS NAV. The OBSS-except-relay state information may be indicated by an OBSS-except-relay-BSS NAV.

The first device, the second device, the third device, or the fourth device may determine the idle/busy state of a channel sensed by the device according to one or more of the intra-BSS NAV, the relay-BSS NAV, and the OBSS-except-relay-BSS NAV that the device maintains. For example, for a virtual carrier-sense (CS) indication for a medium, when all NAV (e.g., intra-BSS NAV, relay-BSS NAV, and OBSS-except-relay-BSS NAV) timers maintained by the device are zero, the virtual CS indication is that the medium is idle. When any one of the NAV timers is non-zero, the virtual CS indication is that the medium is busy.

Illustratively, for the first device, the intra-BSS NAV may be a first NAV. That is, the first state information may be indicated by the first NAV. The relay-BSS NAV of the first device may be a second NAV. That is, the second state information may be indicated by the second NAV. The OBSS-except-relay-BSS NAV of the first device may be a third NAV.

Illustratively, for the second device, the intra-BSS NAV may be a fourth NAV. That is, the fourth state information may be indicated by the fourth NAV. The relay-BSS NAV of the second device may be a fifth NAV. That is, the fifth state information may be indicated by the fifth NAV. The OBSS-except-relay-BSS NAV of the second device may be a sixth NAV. That is, the sixth state information may be indicated by the sixth NAV.

Illustratively, for the third device, the intra-BSS NAV may be a seventh NAV. That is, the seventh state information

may be indicated by the seventh NAV. The relay-BSS NAV of the third device may be an eighth NAV. That is, the eighth state information may be indicated by the eighth NAV. The OBSS-except-relay-BSS NAV of the third device may be a ninth NAV. That is, the ninth state information may be indicated by the ninth NAV.

Illustratively, for the fourth device, the intra-BSS NAV may be a tenth NAV. That is, the tenth state information may be indicated by the tenth NAV. The relay-BSS NAV of the fourth device may be an eleventh NAV. That is, the eleventh state information may be indicated by the eleventh NAV. The OBSS-except-relay-BSS NAV of the fourth device may be a twelfth NAV. That is, the twelfth state information may be indicated by the twelfth NAV.

Update methods of the first state information, the second state information, and the third state information are described below respectively.

In some embodiments, when a first frame received by the first device satisfies a first condition, the first device may update the first state information. The first frame may be a frame received in a PHY service data unit (PSDU). The first device may update the first state information using a duration indicated by the first frame.

With an example of the first state information being indicated by a first NAV, the content of the first condition is described below.

The first condition may include that, for example: the first frame is a frame transmitted within the first BSS; and the duration indicated by the first frame is greater than the current value of the first NAV. The first condition may further include that: a receiver address / receiving station address (RA) of the first frame is not an address of the first device; or, the first device is not a holder of the TXOP, and a PPDU carrying the first frame does not contain a frame that requests an immediate response from the first device; or, the first device is not the holder of the TXOP, and the first frame is a trigger frame. The address of the first device may be a MAC address of the first device.

In some embodiments, when a second frame received by the first device satisfies a second condition, the first device may update the second state information. The second frame may be a frame received in a PSDU. The first device may update the second state information using a duration indicated by the second frame.

With an example of the second state information being indicated by a second NAV, the content of the second condition is described below.

The second condition may include that, for example: the second frame is a frame transmitted within the relay BSS; the duration indicated by the second frame is greater than a current value of the second NAV; and, a receiver address of the second frame is not the address of the first device.

In some embodiments, when a third frame received by the first device satisfies a third condition, the first device may update the third state information. The third frame may be a frame received in a PSDU. The first device may update the third state information using a duration indicated by the third frame.

With an example of the third state information being indicated by a third NAV, the content of the third condition is described below.

The third condition may include that, for example: the third frame is a frame transmitted within an OBSS in which the first device is located, and the third frame is not a frame transmitted within the relay BSS; a duration indicated by the third frame is greater than the current value of the third NAV; and a receiver address of the third frame is not the address of the first device.

Update methods of the fourth state information, the fifth state information, and the sixth state information are described below respectively.

In some embodiments, when a fourth frame received by the second device satisfies a fourth condition, the second device may update the fourth state information. The fourth frame may be a frame received in a PSDU. The second device may update the fourth state information using a duration indicated by the fourth frame.

With an example of the fourth state information being indicated by a fourth NAV, the content of the fourth condition is described below.

The fourth condition may include that, for example: the fourth frame is a frame transmitted within the second BSS; and the duration indicated by the fourth frame is greater than the current value of the fourth NAV. The fourth condition may further include that: a receiver address of the fourth frame is not an address of the second device; or, the second device is not a holder of the TXOP, and a PPDU carrying the fourth frame does not contain a frame that requests an immediate response from the second device; or, the second device is not the holder of the TXOP, and the fourth frame is a trigger frame. The address of the second device may be a MAC address of the second device.

In some embodiments, when a fifth frame received by the second device satisfies a fifth condition, the second device may update the fifth state information. The fifth frame may be a frame received in a PSDU. The second device may update the fifth state information using a duration indicated by the fifth frame.

With an example of the fifth state information being indicated by a fifth NAV, the content of the fifth condition is described below.

The fifth condition may include that, for example: the fifth frame is a frame transmitted within the relay BSS; the duration indicated by the fifth frame is greater than a current value of the fifth NAV; and, a receiver address of the fifth frame is not the address of the second device.

In some embodiments, when a sixth state information received by the second device satisfies a sixth condition, the second device may update the sixth state information. The sixth frame may be a frame received in a PSDU. The second device may update the sixth state information using a duration indicated by the sixth frame.

With an example of the sixth state information being indicated by a sixth NAV, the content of the sixth condition is described below.

The sixth condition may include that, for example: the sixth frame is a frame transmitted within an OBSS in which the second device is located, and the sixth frame is not a frame transmitted within the relay BSS; a duration indicated by the sixth frame is greater than the current value of the sixth NAV; and, a receiver address of the sixth frame is not the address of the second device.

Update methods of the seventh state information, the eighth state information, and the ninth state information are described below respectively.

In some embodiments, when a seventh frame received by the third device satisfies a seventh condition, the third device may update the seventh state information. The seventh frame may be a frame received in a PSDU. The third device may update the seventh state information using a duration indicated by the seventh frame.

With an example of the seventh state information being indicated by a seventh NAV, the content of the seventh condition is described below.

The seventh condition may include that, for example: the seventh frame is a frame transmitted within the third BSS; and the duration indicated by the seventh frame is greater than the current value of the seventh NAV. The seventh condition may further include that: a receiver address of the seventh frame is not an address of the third device; or, the third device is not a holder of the TXOP, and a PPDU carrying the seventh frame does not contain a frame that requests an immediate response from the third device; or, the third device is not the holder of the TXOP, and the seventh frame is a trigger frame. The address of the third device may be a MAC address of the third device.

In some embodiments, when an eighth frame received by the third device satisfies an eighth condition, the third device may update the eighth state information. The eighth frame may be a frame received in a PSDU. The third device may update the eighth state information using a duration indicated by the eighth frame.

With an example of the eighth state information being indicated by an eighth NAV, the content of the eighth condition is described below.

The eighth condition may include that, for example: the eighth frame is a frame transmitted within the relay BSS; the duration indicated by the eighth frame is greater than a current value of the eighth NAV; and, a receiver address of the eighth frame is not the address of the third device.

In some embodiments, when a ninth state information received by the third device satisfies a ninth condition, the third device may update the ninth state information. The ninth frame may be a frame received in a PSDU. The third device may update the ninth state information using a duration indicated by the ninth frame.

With an example of the ninth state information being indicated by a ninth NAV, the content of the ninth condition is described below.

The ninth condition may include that, for example: the ninth frame is a frame transmitted within an OBSS in which the third device is located, and the ninth frame is not a frame transmitted within the relay BSS; a duration indicated by the ninth frame is greater than the current value of the ninth NAV; and, a receiver address of the ninth frame is not the address of the third device.

Update methods of the tenth state information, the eleventh state information, and the twelfth state information are described below respectively.

In some embodiments, when a tenth frame received by the fourth device satisfies a tenth condition, the fourth device may update the tenth state information. The tenth frame may be a frame received in a PSDU. The fourth device may update the tenth state information using a duration indicated by the tenth frame.

With an example of the tenth state information being indicated by a tenth NAV, the content of the tenth condition is described below.

The tenth condition may include that, for example: the tenth frame is a frame transmitted within the third BSS; and the duration indicated by the tenth frame is greater than the current value of the tenth NAV. The tenth condition may further include that: a receiver address of the tenth frame is not an address of the fourth device; or, the fourth device is not a holder of the TXOP, and a PPDU carrying the tenth frame does not contain a frame that requests an immediate response from the fourth device; or, the fourth device is not the holder of the TXOP, and the tenth frame is a trigger frame. The address of the fourth device may be a MAC address of the fourth device.

In some embodiments, when an eleventh frame received by the fourth device satisfies an eleventh condition, the fourth device may update the eleventh state information. The eleventh frame may be a frame received in a PSDU. The fourth device may update the eleventh state information using a duration indicated by the eleventh frame.

With an example of the eleventh state information being indicated by an eleventh NAV, the content of the eleventh condition is described below.

The eleventh condition may include that, for example: the eleventh frame is a frame transmitted within the fifth

BSS; the duration indicated by the eleventh frame is greater than a current value of the eleventh NAV; and, a receiver address of the eleventh frame is not the address of the fourth device.

In some embodiments, when a twelfth state information received by the fourth device satisfies a twelfth condition, the fourth device may update the twelfth state information. The twelfth frame may be a frame received in a PSDU. The fourth device may update the twelfth state information using a duration indicated by the twelfth frame.

With an example of the twelfth state information being indicated by a twelfth NAV, the content of the twelfth condition is described below.

The twelfth condition may include that, for example: the twelfth frame is a frame transmitted within an OBSS in which the fourth device is located, and the twelfth frame is not a frame transmitted within the fifth BSS; a duration indicated by the twelfth frame is greater than the current value of the twelfth NAV; and, a receiver address of the twelfth frame is not the address of the fourth device.

The following describes in detail how each device determines, based on state information, whether to initiate TXOP sharing, respond to TXOP sharing, initiate frame exchange between the first device and the second device, or respond to frame exchange between the first device and the first device.

In some embodiments, the first device may determine, according to the state information of the first device, whether to initiate TXOP sharing or initiate frame exchange with the second device.

Illustratively, the first device may determine whether to initiate TXOP sharing or initiate frame exchange with the second device, based on whether one or more of the first state information, the second state information, and the third state information is/are non-zero.

For example, if one or more of the first state information, the second state information, and the third state information is/are non-zero, then the first device may not initiate TXOP sharing or initiating frame exchange with the second device.

For another example, if the first state information, the second state information, and the third state information are all zero, then the first device may initiate TXOP sharing or initiate frame exchange with the second device.

In some embodiments, the second device may determine, according to the state information of the second device, whether to respond to TXOP sharing or initiate frame exchange with the first device.

Illustratively, the second device may determine whether to initiate TXOP sharing or initiate frame exchange with the second device, based on whether one or more of the fourth state information, the fifth state information, and the sixth state information is/are non-zero.

For example, if one or more of the fourth state information, the fifth state information, and the sixth state information is/are non-zero, then the second device may not respond to TXOP sharing or initiating frame exchange with the first device.

For another example, if the fourth state information, the fifth state information, and the sixth state information are all zero, then the second device may respond to TXOP sharing or initiate frame exchange with the first device.

In some embodiments, the second device may further determine whether to respond to TXOP sharing or initiate frame exchange with the first device, based on whether carrier sensing is required. Whether carrier sensing is required may be indicated by a carrier sense required (CS Required) sub-field. For example, if the value of the CS Required sub-field is 1, carrier sensing is required; and if the value of the CS Required sub-field is 0, carrier sensing is not required. Illustratively, if one or more of the fourth state information, the fifth state information, and the sixth state information is/are non-zero and carrier sensing is required, then the second device may not respond to TXOP sharing or not initiate frame exchange with the first device; and if the fourth state information, the fifth state information, and the sixth state information are all zero, then the second device may respond to TXOP sharing or initiate frame exchange with the first device.

For example, if the sixth state information is non-zero or the CS Required sub-field is 1, then the second device may not respond to TXOP sharing or not initiate frame exchange with the first device. For another example, if the fourth state information, the fifth state information, and the sixth state information are all zero and the CS Required sub-field is 0, then the second device may respond to TXOP sharing or initiate frame exchange with the first device.

It should be noted that the CS Required sub-field may belong to a TXOP-sharing trigger frame for relay-based transmission. The CS Required sub-field may be a sub-field contained in the common info field of the trigger frame. The CS Required sub-field set to 1 may indicate that the first device identified in the user info field of the trigger frame needs to sense the medium using energy detection (ED) and consider the medium state and NAV when deciding whether to respond. The CS Required sub-field set to 0 may indicate that the first device does not need to consider the medium state or NAV when deciding whether to respond.

In some embodiments, the relay device may determine, according to the state information of the third device, whether to respond to TXOP sharing or respond to frame exchange between the first device and the second device.

Illustratively, when one STA is affiliated with the relay device, the relay device may determine whether to respond to TXOP sharing or respond to frame exchange between the first device and the second device, based on whether one or more of the seventh state information, the eighth state information, and the ninth state information is/are non-zero.

For example, if one or more of the seventh state information, the eighth state information, and the ninth state

information is/are non-zero, then the third device may refrain from responding to TXOP sharing or responding to frame exchange between the first device and the second device.

For another example, if the seventh state information, the eighth state information, and the ninth state information are all zero, then the third device may respond to TXOP sharing or respond to frame exchange between the first device and the second device.

In some embodiments, the relay device may determine whether to respond to TXOP sharing or respond to frame exchange between the first device and the second device, based on the state information of the third device and the state information of the fourth device.

Illustratively, when both the third device and the fourth device are affiliated with the relay device, the relay device may determine whether to respond to TXOP sharing or respond to frame exchange between the first device and the second device, based on whether one or more of the seventh state information, the eighth state information, the ninth state information, the tenth state information, the eleventh state information, and the twelfth state information is/are non-zero.

For example, if one or more of the seventh state information, the eighth state information, the ninth state information, the tenth state information, the eleventh state information, and the twelfth state information is/are non-zero, then the third device may refrain from responding to TXOP sharing or responding to frame exchange between the first device and the second device.

For another example, if the seventh state information, the eighth state information, the ninth state information, the tenth state information, the eleventh state information, and the twelfth state information are all zero, then the third device may respond to TXOP sharing or respond to frame exchange between the first device and the second device.

In some embodiments, the third device may further determine whether to respond to TXOP sharing or respond to frame exchange between the first device and the second device, based on whether carrier sensing is required. Illustratively, if the twelfth state information is non-zero and the first device indicates that carrier sensing is required, then the relay device does not respond to TXOP sharing or does not respond to frame exchange between the first device and the second device. If the eighth state information is non-zero, then the relay device does not respond to TXOP sharing or does not respond to frame exchange between the first device and the second device. If the eighth state information, the ninth state information, the tenth state information, and the twelfth state information are all zero, then the relay device responds to TXOP sharing or responds to frame exchange between the first device and the second device. If the eighth state information and the tenth state information are both zero, the ninth state information and/or the twelfth state information is/are non-zero, and the first device indicates that carrier sensing is not required, then the relay device responds to TXOP sharing or responds to frame exchange between the first device and the second device.

In an example, the first device is puSTA (i.e., puSTA initiates TXOP sharing) and the relay device includes uSTA and dSTA. During the TXOP, the OBSS-except-relay-BSS NAV of the dSTA the is not updated by a transmission from the puSTA. Therefore, if the OBSS-except-relay-BSS NAV of the dSTA is non-zero and the relay receives from the puSTA a trigger frame that initiates relay-based TXOP sharing with the CS Required sub-field equal to 1, the relay will not respond to the relay-based TXOP sharing. Likewise, if the relay-BSS NAV of the uSTA is not 0, the relay will not respond to the relay-based TXOP sharing. If the relay-BSS NAV of the uSTA is 0, the OBSS-except-relay-BSS NAV of the uSTA is 0, the intra-BSS NAV of the dSTA is 0, and the OBSS-except-relay-BSS NAV of the dSTA is 0, the relay will respond to perform the relay-based TXOP sharing. If the relay-BSS NAV of the uSTA is 0, the intra-BSS NAV of the dSTA is 0, and either the OBSS-except-relay-BSS NAV of the uSTA or the OBSS-except-relay-BSS NAV of the dSTA (or both) is not 0, and if the relay receives a trigger frame for initiating relay-based TXOP sharing with the CS Required sub-field equal to 0, the relay may respond to perform the relay-based TXOP sharing.

In an example, the first device is pdSTA (i.e., pdSTA initiates TXOP sharing) and the relay device includes uSTA and dSTA. If the intra-BSS NAV of the uSTA is non-zero (or the relay-BSS NAV of the dSTA is non-zero) or the OBSS-except-relay-BSS NAV of the uSTA is non-zero (or the OBSS-except-relay-BSS NAV of the dSTA is non-zero), the dSTA may refrain from responding to perform relay-based TXOP sharing. If the intra-BSS NAV and OBSS-except-relay-BSS NAV of the uSTA are both 0 and the OBSS-except-relay-BSS NAV and relay-BSS NAV of the dSTA are both 0, the relay may respond to perform the relay-based TXOP sharing.

In the following, embodiments 1 and 2 are used to illustrate how each device maintains state information and how to determine whether to initiate or respond to TXOP sharing or to initiate or respond to frame exchange between the first device and the second device based on the state information.

Embodiment 1

In Embodiment 1, relay-based TXOP sharing is initiated by puSTA.

The intra-BSS NAV of the uSTA may be set by the puSTA, and the relay-BSS NAV of the dSTA may also be set by the puSTA. This setting prevents uSTA and dSTA from contending for the channel.

Optionally, during the TXOP, the OBSS-except-relay-BSS NAV of the dSTA is not updated by a transmission from the puSTA. Therefore, if the OBSS-except-relay-BSS NAV of the dSTA is non-zero and the relay receives from the puSTA a

trigger frame for initiating relay-based TXOP sharing with the CS Required sub-field equal to 1, the relay device will not respond to perform the relay-based TXOP sharing.

Optionally, when the relay-BSS NAV of the uSTA is non-zero, the relay device will not respond to perform the relay-based TXOP sharing.

Optionally, when the relay-BSS NAV of the uSTA is 0, the OBSS-except-relay-BSS NAV of the uSTA is 0, the intra-BSS NAV of the dSTA is 0, and the OBSS-except-relay-BSS NAV of the dSTA is 0, the relay device will respond to perform the relay-based TXOP sharing.

Optionally, when the relay-BSS NAV of the uSTA is 0, the intra-BSS NAV of the dSTA is 0, and either the OBSS-except-relay-BSS NAV of the uSTA or the OBSS-except-relay-BSS NAV of the dSTA (or both) is non-zero, if the relay device receives a trigger frame for initiating relay-based TXOP sharing with the CS Required sub-field equal to 0, the relay device may respond to perform the relay-based TXOP sharing.

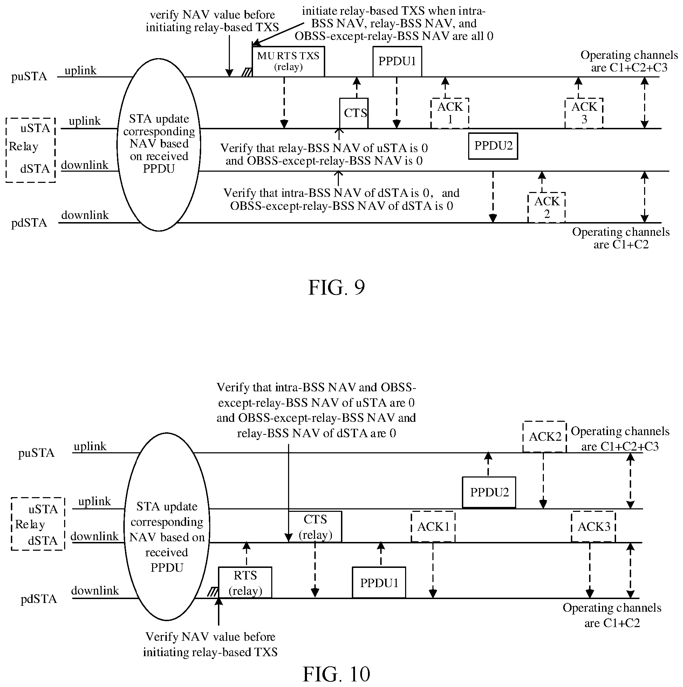

FIG. 9 is an example diagram of a relay-based TXOP sharing procedure provided in Embodiment 1. The procedure illustrated in FIG. 9 may be performed by the puSTA, the relay device, and the pdSTA. The relay device includes the uSTA and the dSTA.

The operating channels on which the BSS of the uplink operates include C1, C2, and C3, where C1, C2, and C3 each refer to a set of operating channels. C3 may contain zero, one, or multiple channels. When C3 contains zero channel, the operating channels on which the BSS of the uplink operates include C1 and C2. On the uplink, C1 is the primary channel. The operating channels on which the BSS of the downlink link operates include C1 and C2.

The pdSTA, the uSTA and dSTA of the relay device, and the pdSTA each maintain an intra-BSS NAV, a relay-BSS NAV, and an OBSS-except-relay-BSS NAV to which channel C1 and channel C2 are respectively or jointly corresponding.

The puSTA initiates relay-based TXOP sharing when the intra-BSS NAV, relay-BSS NAV, and OBSS-except-relay-BSS NAV corresponding to channel C1 or corresponding to both channels C1 and C2 are all zero.

If the puSTA initiates relay-based TXS on channel C1 only, the prerequisite is that the primary channel of the BSS on the downlink is also C1; if the puSTA initiates relay-based TXS on both channels C1 and C2, the prerequisite is that the primary channel of the BSS on the downlink link may be either C1 or C2.

When the relay receives the relay-based TXS trigger frame sent by the puSTA, the relay responds according to the NAV states corresponding to C1 and C2 respectively. When the relay verifies that the relay-BSS NAV of the uSTA corresponding to C1 and/or C2 is 0, the OBSS-except-relay-BSS NAV of the uSTA is 0, the intra-BSS NAV of the dSTA is 0, and the OBSS-except-relay-BSS NAV of the dSTA is 0, the relay responds with a CTS frame on C1 and/or C2, indicating confirmation that relay-based TXS will be performed on C1 and/or C2.

When the relay determines that relay-based TXS will be performed on C1 and/or C2, puSTA may send PPDU1 to uSTA. uSTA may send ACK1 corresponding to PPDU1 to puSTA. uSTA then sends PPDU2 corresponding to PPDU1 to pdSTA. After receiving PPDU2, pdSTA may send ACK2 to dSTA. Then, uSTA may send ACK3 to puSTA.

Embodiment 2

In Embodiment 2, TXOP sharing is initiated by pdSTA.

If the intra-BSS NAV of the uSTA is non-zero or the OBSS-except-relay-BSS NAV of the uSTA is non-zero, the uSTA may refrain from responding to perform relay-based TXOP sharing.

If the relay-BSS NAV of the dSTA is non-zero or the OBSS-except-relay-BSS NAV of the dSTA is non-zero, the dSTA may refrain from responding to perform relay-based TXOP sharing.

If the intra-BSS NAV and OBSS-except-relay-BSS NAV of the uSTA are both zero, and the OBSS-except-relay-BSS NAV and relay-BSS NAV of the dSTA are both zero, then the dSTA or uSTA of the relay may respond to perform relay-based TXOP sharing.

FIG. 10 is an example diagram of a relay-based TXOP sharing procedure provided in Embodiment 2. The procedure illustrated in FIG. 10 may be performed by puSTA, the relay device, and pdSTA. The relay device includes uSTA and dSTA.

The operating channels on which the BSS of the uplink operates include C1, C2, and C3, where C1, C2, and C3 each refer to a set of operating channels. C3 may contain zero, one, or multiple channels. When C3 contains zero channel, the operating channels on which the BSS of the uplink operates include C1 and C2. On the uplink, C1 is the primary channel. The operating channels on which the BSS of the downlink link operates include C1 and C2.

The pdSTA, the uSTA and dSTA of the relay device, and pdSTA each maintain an intra-BSS NAV, a relay-BSS NAV, and an OBSS-except-relay-BSS NAV to which channel C1 and channel C2 are respectively or jointly corresponding.

pdSTA initiates relay-based TXOP sharing when the intra-BSS NAV, relay-BSS NAV, and OBSS-except-relay-BSS NAV corresponding to channel C1 or to both channels C1 and C2 are all zero.

If pdSTA initiates relay-based TXS on channel C1 only, the prerequisite is that the primary channel of the BSS on the downlink link is also C1. If pdSTA initiates relay-based TXS on both channels C1 and C2, the prerequisite is that the primary channel of the BSS on the downlink link may be either C1 or C2.

When the relay receives the relay-based RTS frame sent by pdSTA, it responds according to the NAV states corresponding to C1 and C2 respectively. When the relay verifies that the intra-BSS NAV and OBSS-except-relay-BSS NAV of the uSTA corresponding to C1 and/or C2 are both zero and the OBSS-except-relay-BSS NAV and relay-BSS NAV of the dSTA are both zero, the realy responds with a relay-based CTS frame on C1 and/or C2, indicating confirmation that relay-based TXS will be performed on C1 and/or C2.

In some scenarios, the device cannot update its relay state information and/or its OBSS-except-relay state information in time. For example, when the first device and the second device are far apart, the second device may not be able to receive signals (or PPDUs) sent by the first device, or the first device may not be able to receive signals (or PPDUs) sent by the second device, so that the second device cannot update the fifth state information and/or the sixth state information, or the first device cannot update the second state information and/or the third state information. Illustratively, the first device may not be able to receive signals (or PPDUs) of the communication between the second device and the relay device, so that the first device cannot update the second state information and/or the third state information. Illustratively, the second device may not be able to receive signals (or PPDUs) of the communication between the first device and the relay device, so that the second device cannot update the fifth state information and/or the sixth state information.

To address the above problem, the present disclosure proposes that the relay device may send a first indication frame and/or a second indication frame to indicate the relay state information. Since both the first indication frame and the second indication frame can be used to indicate the relay state information, the first indication frame and the second indication frame may be the same first-type indication frame. For example, the first-type indication frame may be called a relay-BSS NAV synchronization frame.

In some embodiments, the third device may send the first indication frame to the first device. The first indication frame is used to indicate the second state information.

In some embodiments, the third device may send the second indication frame to the second device. The second indication frame is used to indicate the fifth state information.

It can be understood that, based on the first indication frame or the second indication frame, the first device or the second device can synchronize the relay state information, so as to accurately determine whether to initiate or respond to TXOP sharing, or to initiate or respond to frame exchange between the first device and the second device.

The first-type indication frame may be a control frame. For example, the first indication frame may be a control frame. The second indication frame may be a control frame.

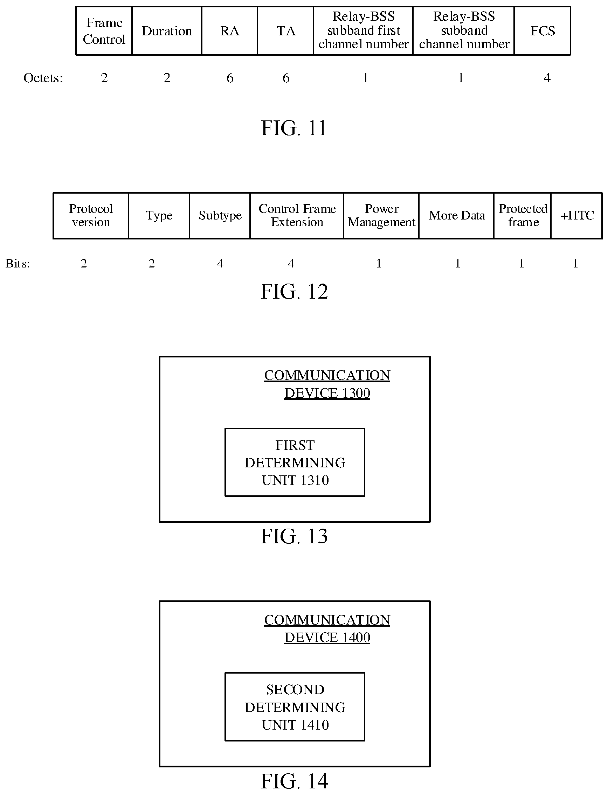

FIG. 11 is a schematic diagram of a frame format of the first-type indication frame provided in an embodiment of the present disclosure.

As illustrated in FIG. 11, the firs-type indication frame may include a frame control field. The definition of sub-fields of the frame control field may comply with the sub-field settings of the frame control field of the control frame carried in non-S1G PPDU in the IEEE 802.11 standard. For example, the sub-field format of the frame control field may refer to the frame control field format when the type subfield = 1 and the subtype subfield = 6 for control frames carried in non-S1G PPDUs.

FIG. 12 is an example diagram of the format of a control frame field carrying a control frame extension sub-field. As illustrated in FIG. 12, the frame control field may include one or more of the following sub-fields: protocol version, type, subtype, control frame extension, power management, more data, protected frame, +HTC.

The first-type indication frame may be indicated by a combination of at least two of the following fields in the frame control field of the indication frame: type, subtype, and control frame extension. That is, the type or function of the first indication frame may be indicated by a combination of at least two of the following fields in the frame control field of the first indication frame: type, subtype, and control frame extension. The type or function of the second indication frame may be indicated by a combination of at least two of the following fields in the frame control field of the second indication frame: type, subtype, and control frame extension.

Illustratively, the function of the first-type indication frame may be indicated through a combination of type and subtype. Illustratively, the function of the first-type indication frame may be indicated through a combination of type and subtype. For example, the control frame extension subtype can increase the subtype range by reusing B8-B11. The following illustrates an example of indication through a combination of type, subtype, and control frame extension, with reference to Tables 1-1 and 1-2.

Table 1-1

| Value of Type B3 B2 | Type description | Value of Subtype B7 B6 B5 B4 | Subtype description |
|---|---|---|---|
| ... | ... | ... | ... |
| 01 | control | 0110 | control frame extension |
| ... | ... | ... | ... |

Table 1-2

| Value of Type B3 B2 | Value of Subtype B7 B6 B5 B4 | Value of Control Frame Extension B11 B10 B9 B8 | Description |
|---|---|---|---|
| ... | ... | ... | ... |
| 01 | 0110 | 1100 | first-type indication frame (relay-BSS NAV synchronization frame) |
| ... | ... | ... | ... |

As illustrated in FIG. 11, the first-type indication frame may include a duration field. A duration indicated by the duration field is related to updating the relay state. For example, the duration field of the first indication frame is used for indicating a first duration, where the first duration is related to updating the second state information. For another example, the duration field of the second indication frame is used for indicating a second duration, where the second duration is related to updating the fifth state information.

In some embodiments, the duration field in a relay-BSS NAV synchronization frame is set to a time corresponding to: Relay-BSS NAV of the transmitting STA of the relay - (TxTime(relay-BSS NAV synchronization frame) + duration offset), where TxTime(·) denotes transmission time, and the duration offset may be a SIFS duration. The "Relay-BSS NAV" of the transmitting STA of the relay is a Relay-BSS NAV of the transmitting STA at the start of transmission of the relay-BSS NAV synchronization frame. The "Relay-BSS NAV" of the transmitting STA of the relay refers to a NAV of the transmitting STA corresponding to a Relay-BSS sub-band indicated by a Relay-BSS Sub-band First Channel Number sub-field and a Relay-BSS Sub-band Channel Number sub-field.

Optionally, when the second state information is indicated by the second NAV, the first duration may satisfy that: first duration = indicated updated second NAV duration - (transmission time of first indication frame + duration offset). The indicated updated second NAV duration may be the value of the second NAV at the start of transmission of the first indication frame. The indicated updated second NAV duration may be a NAV corresponding to an indicated BSS sub-band indicated by the Relay-BSS Sub-band First Channel Number subfield and Relay-BSS Sub-band Channel Number sub-field.

Optionally, when the fifth state information is indicated by the fifth NAV, the second duration may satisfy that: second duration = indicated updated fifth NAV duration - (transmission duration of second indication frame + duration offset). The indicated updated fifth NAV duration may be the value of the fifth NAV at the start of transmission of the second indication frame. The indicated updated fifth NAV duration may be a NAV corresponding to an indicated BSS sub-band indicated by the Relay-BSS Sub-band First Channel Number sub-field and Relay-BSS Sub-band Channel Number sub-field.

As illustrated in FIG. 11, the first-type indication frame may include the RA and/or a transmitter address /transmitting station address (TA). RA is used to indicate an address of a receiving station of the first-type indication frame. TA is used to indicate an address of a transmitting station of the first-type indication frame.

In some embodiments, the first-type indication frame may include fields that carry channel information or sub-band information of the relay BSS. For example, the first indication frame may include a first field which may be used to indicate channel information or sub-band information of the relay BSS of the first device. For another example, the second indication frame may include a second field which may be used to indicate channel information or sub-band information of the relay BSS of the second device. The sub-band information may include: the first channel number of the sub-band; the number of channels in the sub-band. Illustratively, the Relay-BSS Sub-band First Channel Number may be set to the channel number of the first channel in the sub-band of channels supported by the relay BSS that corresponds to the Relay-BSS NAV. The Relay-BSS Sub-band Channel Number sub-field is set to the number of channels in the sub-band of channels supported by the relay BSS that corresponds to the Relay-BSS NAV.

As illustrated in FIG. 11, the first-type indication frame may include the Relay-BSS Sub-band First Channel Number field and/or the Relay-BSS Sub-band Channel Number field.

It should be noted that "field" may also be called "subfield" or "sub-field." One field may occupy one or more bytes (octets), or one field may occupy one or more bits.

The method embodiments of the present disclosure have been described in detail above. Apparatus embodiments of the present disclosure are described in detail below. It should be understood that the description of the method embodiments corresponds to the description of the apparatus embodiments, and therefore parts not described in detail can be found in the foregoing method embodiments.

FIG. 13 is a schematic structural diagram of a communication device 1300 provided in an embodiment of the present disclosure. The communication device 1300 may be a first device. The communication device 1300 may include a first determining unit 1310.

The first determining unit 1310 is configured to determine, according to state information of the first device, whether to initiate TXOP sharing or initiate a frame exchange with a second device. The first device and the second device communicate via a relay device. A BSS where a link between the first device and the relay device is located is a first BSS. A BSS where a link between the second device and the relay device is located is a relay BSS. The state information of the first device includes one or more of: first state information for indicating predicted duration information of future media traffic generated due to frame transmission by a station within the first BSS; second state information for indicating predicted duration information of future media traffic generated due to frame transmission by a station within the relay BSS; and third state information for indicating predicted duration information of future media traffic generated due to frame transmission by a station within a OBSS, in which the first device is located, except the first BSS and the relay BSS.

In some embodiments, the first state information is indicated by a first NAV; the second state information is indicated by a second NAV; and the third state information is indicated by a third NAV.

In some embodiments, the device 1300 is further configured to update the first NAV in a case that a first frame received by the first device satisfies a first condition. The first condition includes that: the first frame is a frame transmitted within the first BSS; and a duration indicated by the first frame is greater than a current value of the first NAV. The first condition further includes that: a receiver address of the first frame is not an address of the first device; or, the first device is not a holder of the TXOP and a PPDU carrying the first frame does not contain a frame requesting an immediate response from the first device; or, the first device is not the holder of the TXOP and the first frame is a trigger frame.

In some embodiments, the device 1300 is further configured to update the second NAV in a case that a second frame received by the first device satisfies a second condition. The second condition includes that: the second frame is a frame transmitted within the relay BSS; a duration indicated by the second frame is greater than a current value of the second NAV; and a receiver address of the second frame is not an address of the first device.

In some embodiments, the device 1300 is further configured to update the third NAV in a case that a third frame received by the first device satisfies a third condition. The third condition includes that: the third frame is a frame transmitted within an OBSS where the first device is located, and the third frame is not a frame transmitted within the relay BSS; a duration indicated by the third frame is greater than a current value of the third NAV; and a receiver address of the third frame is not an address of the first device.

In some embodiments, the first determining unit is specifically configured to: in a case that one or more of the first state information, the second state information, and the third state information are non-zero, not initiate the TXOP sharing or not initiate the frame exchange with the second device; and/or in a case that the first state information, the second state information, and the third state information are all zero, initiate the TXOP sharing or initiate the frame exchange with the second device.

In some embodiments, the device 1300 is further configured to receive a first indication frame, where the first indication frame is used to indicate the second state information.

In some embodiments, the first indication frame is a control frame.

In some embodiments, a duration field of the control frame is used to indicate a first duration, and the first duration is related to updating the second state information.

In some embodiments, the second state information is indicated by a second NAV, and the first duration satisfies that: the first duration = an indicated updated second NAV duration - (a transmission duration of the first indication frame + a duration offset).

In some embodiments, the duration offset is an SIFS duration.

In some embodiments, a type of the first indication frame is indicated by a combination of at least two of following frame control fields in the first indication frame: type; subtype; and control frame extension.

In some embodiments, the first indication frame includes a first field, and the first field is used to indicate channel information or information of a sub-band of the relay BSS.

In some embodiments, the information of the sub-band includes one or more of: a first channel number of the sub-band; and a number of channels of the sub-band.

In some embodiments, the link between the first device and the relay device includes a P2P link, and/or the link between the second device and the relay device includes a P2P link.

In some embodiments, the first device includes a device providing DSS access.

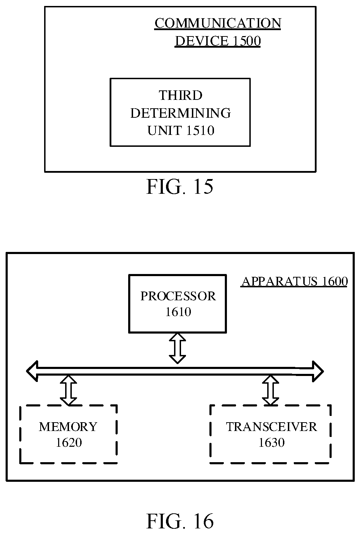

In an optional embodiment, the first determining unit 1310 may be a processor 1610. The communication device 1300 may further include a memory 1620 and a transceiver 1630, specifically as illustrated in FIG. 16.

FIG. 14 is a schematic structural diagram of a communication device 1400 provided in an embodiment of the present disclosure. The communication device 1400 may be a second device. The communication device 1400 may include a second determining unit 1410.

The second determining unit 1410 is configured to determine, according to state information of the second device, whether to respond to TXOP sharing initiated by a first device or whether to initiate a frame exchange with the first device. The first device and the second device communicate via a relay device. A BSS where a link between the second device and the relay device is located is a second BSS, and a BSS where a link between the first device and the relay device

is located is a relay BSS. The state information of the second device includes one or more of: fourth state information for indicating predicted duration information of future media traffic generated due to frame transmission by a station within the second BSS; fifth state information for indicating predicted duration information of future media traffic generated due to frame transmission by a station within the relay BSS; and sixth state information for indicating predicted duration information of future media traffic generated due to frame transmission by a station within a OBSS, in which the second device is located, except the second BSS and the relay BSS.

In some embodiments, the fourth state information is indicated by a fourth NAV; the fifth state information is indicated by a fifth NAV; and the sixth state information is indicated by a sixth NAV. 63. The device of claim 62, where the device is further configured to update the fourth NAV in a case that a fourth frame received by the second device satisfies a fourth condition, where the fourth condition includes that: the fourth frame is a frame transmitted within the second BSS; a duration indicated by the fourth frame is greater than a current value of the fourth NAV; and a receiver address of the fourth frame is not an address of the second device; or, the second device is not a holder of the TXOP and a PPDU carrying the fourth frame does not contain a frame requesting an immediate response from the second device; or, the second device is not the holder of the TXOP and the fourth frame is a trigger frame.

In some embodiments, the device 1400 is further configured to update the fifth NAV in a case that a fifth frame received by the second device satisfies a fifth condition. The fifth condition includes that: the fifth frame is a frame transmitted within the relay BSS; a duration indicated by the fifth frame is greater than a current value of the fifth NAV; and a receiver address of the fifth frame is not an address of the second device.

In some embodiments, the device 1400 is further configured to update the sixth NAV in a case that a sixth frame received by the second device satisfies a sixth condition. The sixth condition includes that: the sixth frame is a frame transmitted within an OBSS where the second device is located, and the sixth frame is not a frame transmitted within the relay BSS; a duration indicated by the sixth frame is greater than a current value of the sixth NAV; and a receiver address of the sixth frame is not an address of the second device.

In some embodiments, the second determining unit 1410 is specifically configured to: in a case that one or more of the fourth state information, the fifth state information, and the sixth state information are non-zero, not respond the TXOP sharing or not initiate the frame exchange with the first device; and/or in a case that the fourth state information, the fifth state information, and the sixth state information are all zero, respond to the TXOP sharing or initiatie the frame exchange with the first device.

In some embodiments, the device 1400 is further configured to receive a second indication frame, where the second indication frame is used to indicate the fifth state information.

In some embodiments, the second indication frame is a control frame.

In some embodiments, a duration field of the control frame is used to indicate a second duration, and the second duration is related to updating the fifth state information.

In some embodiments, the fifth state information is indicated by a fifth NAV, and the second duration satisfies that: the second duration = an indicated updated fifth NAV duration - (a transmission duration of the second indication frame + a duration offset).

In some embodiments, the duration offset is an SIFS duration.

In some embodiments, a type of the second indication frame is indicated by a combination of at least two of following frame control fields in the second indication frame: type; subtype; and control frame extension.

In some embodiments, the second indication frame includes a second field, and the second field is used to indicate channel information or information of a sub-band of the relay BSS.

In some embodiments, the information of the sub-band includes one or more of: a first channel number of the sub-band; and the number of channels of the sub-band.

In some embodiments, the link between the first device and the relay device includes a P2P link, and/or the link between the second device and the relay device includes a P2P link.

In some embodiments, the first device includes a device providing DSS access.

In an optional embodiment, the second determining unit 1410 may be a processor 1610. The communication device 1400 may further include a memory 1620 and a transceiver 1630, specifically as illustrated in FIG. 16.

FIG. 15 is a schematic structural diagram of a communication device 1500 provided in an embodiment of the present disclosure. The communication device 1500 may be a relay device. The communication device 1500 may include a third determining unit 1510.

The third determining unit 1510 is configured to determine, according to state information of a third device, whether to respond to TXOP sharing initiated by a first device or respond to a frame exchange between the first device and a second device. The third device belongs to the relay device, and the relay device is used to implement communication between the first device and the second device. In a case that the third device and the first device communicate via a link, a BSS where the link between the third device and the first device is located is a third BSS, and a BSS where a link between the relay device and the second device is located is a relay BSS. In a case that the third device and the second device communicate via a link, a BSS where the link between the third device and the second device is located is a third BSS, and a

BSS where a link between the relay device and the first device is located is a relay BSS. The state information of the third device includes one or more of: seventh state information for indicating predicted duration information of future media traffic generated due to frame transmission by a station within the third BSS; eighth state information for indicating predicted duration information of future media traffic generated due to frame transmission by a station within the relay BSS; and ninth state information for indicating predicted duration information of future media traffic generated due to frame transmission by a station within an OBSS, in which the third device is located, except the third BSS and the relay BSS.

In some embodiments, the seventh state information is indicated by a seventh NAV; the eighth state information is indicated by an eighth NAV; and the ninth state information is indicated by a ninth NAV.

In some embodiments, the device 1500 is further configured to update the seventh NAV in a case that a seventh frame received by the third device satisfies a seventh condition. The seventh condition includes that: the seventh frame is a frame transmitted within the third BSS; a duration indicated by the seventh frame is greater than a current value of the seventh NAV; and a receiver address of the seventh frame is not an address of the third device; or, the third device is not a holder of the TXOP and a PPDU carrying the seventh frame does not contain a frame requesting an immediate response from the third device; or, the third device is not the holder of the TXOP and the seventh frame is a trigger frame.

In some embodiments, the device 1500 is further configured to update the eighth NAV in a case that an eighth frame received by the third device satisfies an eighth condition. The eighth condition includes that: the eighth frame is a frame transmitted within the relay BSS; a duration indicated by the eighth frame is greater than a current value of the eighth NAV; and a receiver address of the eighth frame is not an address of the third device.

In some embodiments, the device 1500 is further configured to update the ninth NAV in a case that a ninth frame received by the third device satisfies a ninth condition. The ninth condition includes that: the ninth frame is a frame transmitted within an OBSS where the third device is located, and the ninth frame is not a frame transmitted within the relay BSS; a duration indicated by the ninth frame is greater than a current value of the ninth NAV; and a receiver address of the ninth frame is not an address of the third device.

In some embodiments, the third determining unit 1510 is specifically configured to: in a case that one or more of the seventh state information, the eighth state information, and the ninth state information are non-zero, not responding to, by the relay device, the TXOP sharing or not responding to, by the relay device, the frame exchange between the first device and the second device; in a case that the seventh state information, the eighth state information, and the ninth state information are all zero, responding to, by the relay device, the TXOP sharing or responding to, by the relay device, the frame exchange between the first device and the second device.

In some embodiments, the third determining unit 1510 is specifically configured to determine, according to the state information of the third device and state information of a fourth device, whether to respond to the TXOP sharing initiated by the first device or respond to the frame exchange between the first device and the second device. The fourth device belongs to the relay device, the third device and the first device communicate via a link, and the fourth device and the second device communicate via a link. A BSS where the link between the fourth device and the second device is located is a fourth BSS, and a BSS where a link between the relay device and the first device is located is a fifth BSS. The state information of the fourth device includes one or more of: tenth state information for indicating predicted duration information of future media traffic generated due to frame transmission by a station within the fourth BSS; eleventh state information for indicating predicted duration information of future media traffic generated due to frame transmission by a station within the fifth BSS; and twelfth state information for indicating predicted duration information of future media traffic generated due to frame transmission by a station within an OBSS, in which the fourth device is located, except the fourth BSS and the fifth BSS.

In some embodiments, the third determining unit 1510 is specifically configured to: in a case that the twelfth state information is non-zero and the first device indicates that carrier sense is required, not respond to the TXOP sharing or not respond to the frame exchange between the first device and the second device; in a case that the eighth state information is non-zero, not respond to the TXOP sharing or not respond to the frame exchange between the first device and the second device; in a case that the eighth state information, the ninth state information, the tenth state information, and the twelfth state information are all zero, respond to the TXOP sharing or respond to the frame exchange between the first device and the second device; and in a case that the eighth state information and the tenth state information are both zero and the ninth state information and/or the twelfth state information are non-zero, and that the first device indicates that carrier sense is not required, respond to the TXOP sharing or respond to the frame exchange between the first device and the second device.

In some embodiments, the device 1500 is further configured to transmit a second indication frame and/or a first indication frame. The first indication frame is used to indicate second state information, and the second state information is used for indicating predicted duration information of future media traffic generated due to frame transmission by a station within a relay BSS of the first device. The second indication frame is used to indicate fifth state information, and the fifth state information is used for indicating predicted duration information of future media traffic generated due to frame transmission by a station within a relay BSS of the second device.

In some embodiments, the first indication frame is a control frame, and the second indication frame is a control

frame.

In some embodiments, a duration field of the first indication frame is used to indicate a first duration, and the first duration is related to updating the second state information. A duration field of the second indication frame is used to indicate a second duration, and the second duration is related to updating the fifth state information.

In some embodiments, the second state information is indicated by a second NAV, and the first duration satisfies that: the first duration = an indicated updated second NAV duration - (a transmission duration of the first indication frame + a duration offset). The fifth state information is indicated by a fifth NAV, and the second duration satisfies that: the second duration = an indicated updated fifth NAV duration - (a transmission duration of the second indication frame + a duration offset).

In some embodiments, the duration offset is an SIFS duration.

In some embodiments, a type of the first indication frame is indicated by a combination of at least two of following frame control fields in the first indication frame: type, subtype, and control frame extension. A type of the second indication frame is indicated by a combination of at least two of following frame control fields in the second indication frame: type, subtype, and control frame extension.

In some embodiments, the first indication frame includes a first field, and the first field is used to indicate channel information or information of a sub-band of the relay BSS of the first device. The second indication frame includes a second field, and the second field is used to indicate channel information or information of a sub-band of the relay BSS of the second device.

In some embodiments, the information of the sub-band includes one or more of: a first channel number of the sub-band; a number of channels of the sub-band.

In some embodiments, the link between the first device and the relay device includes a P2P link, and/or the link between the second device and the relay device includes a P2P link.

In some embodiments, the first device includes a device providing DSS access.

In an optional embodiment, the third determining unit 1510 may be a processor 1610. The communication device 1500 may further include a memory 1620 and a transceiver 1630, specifically as illustrated in FIG. 16.

FIG. 16 is a schematic structural diagram of a communication apparatus according to embodiments of the disclosure. The dashed lines illustrated in FIG. 16 indicate that the unit or module is optional. The apparatus 1600 can be used to implement the method described in the above method embodiments. The apparatus 1600 may be a chip or a communication device.

The apparatus 1600 may include one or more processors 1610. The processor 1610 can support the apparatus 1600 in implementing the methods described in the aforementioned method embodiments. The processor 1610 may be a general-purpose processor or a dedicated-purpose processor. For example, the processor may be a central processing unit (CPU). Alternatively, the processor may also be another general-purpose processor, a digital signal processor (DSP), an application specific integrated circuit (ASIC), a field programmable gate array (FPGA), or other programmable logic devices, discrete gates or transistor logic devices, discrete hardware components, etc. A general-purpose processor may be a microprocessor or may also be any conventional processor, etc.

The apparatus 1600 may further include one or more memories 1620. The memory 1620 is configured to store programs that can be executed by the processor 1610, to cause the processor 1610 to execute the methods described in the aforementioned method embodiments. The memory 1620 may be a separate device independent of the processor 1610 or may be integrated into the processor 1610.

The apparatus 1600 may further include a transceiver 1630. The processor 1610 can communicate with other devices or chips through the transceiver 1630. For example, the processor 1610 can transmit and receive data with other devices or chips through the transceiver 1630.

A computer-readable storage medium is further provided in embodiments of the disclosure. The computer-readable storage medium is configured to store programs. The computer-readable storage medium is applicable to the communication device provided in embodiments of the disclosure, and the programs are operable with a computer to execute the method implemented by the communication device in each embodiment of the disclosure.

A computer program product is further provided in embodiments of the disclosure. The computer program product includes programs. The computer program product is applicable to the communication device provided in embodiments of the disclosure, and the programs are operable with a computer to execute the method implemented by the communication device in each embodiment of the disclosure.

A computer program is further provided in embodiments of the disclosure. The computer program is applicable to the communication device provided in embodiments of the disclosure, and the computer program is operable with a computer to execute the method implemented by the communication device in each embodiment of the disclosure.

It can be understood that, the terms "system" and "network" herein are usually used interchangeably throughout this disclosure. In addition, the terms used in the disclosure are merely for explaining the specific embodiments of the disclosure, and are not intended to limit the disclosure. The terms "first", "second", "third", "fourth" and the like used in description, claims and the accompanying drawings of the disclosure are used to distinguish different objects rather than to

describe a particular order. In addition, the terms "include", "comprise", and "have" as well as variations thereof are intended to cover non-exclusive inclusion.

In embodiments of the disclosure, the referred "indication" may be a direct indication, may be an indirect indication, or may mean that there is an association relationship. For example, *A* indicates *B* may mean that *A* directly indicates *B*, for instance, *B* can be obtained according to *A*; may mean that *A* indirectly indicates *B*, for instance, *A* indicates *C*, and *B* can be obtained according to *C*; or may mean that that there is an association relationship between *A* and *B*.

In implementations of the disclosure, "*B* corresponding to *A*" indicates that *B* is associated with *A*, and *B* may be determined according to *A*. However, it should be further understood that, "determine *B* according to *A*" does not mean that *B* is determined according to *A* only, and *B* may also be determined according to *A* and/or other information.

In embodiments of the disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" or the "pre-configured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

In the embodiments of the present disclosure, the term "including" may refer to direct inclusion or indirect inclusion. Optionally, the term "including" mentioned in the embodiments of the present disclosure may be replaced with "indicating" or "for determining". For example, "A includes B" may be replaced with "A indicates B" or "A is used for determining B".

In various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

In embodiments of the disclosure, the "protocol" may refer to a communication standard protocol, which may include, for example, an LTE protocol, an NR protocol, and a protocol applied to a future communication system, and the disclosure is not limited in this regard.

It will be appreciated that the system, apparatuses, and methods disclosed in embodiments of the disclosure may also be implemented in various other manners. For example, the above apparatus embodiments are merely illustrative, e.g., the division of units is only a division of logical functions, and other manners of division may also be available in practice, e.g., multiple units or assemblies may be combined or may be integrated into another system, or some features may be ignored or omitted. In other respects, the coupling or direct coupling or communication connection as illustrated or discussed may be an indirect coupling or communication connection through some interface, device or unit, and may be electrical, mechanical, or otherwise.

Units illustrated as separated components may or may not be physically separated. Components displayed as units may or may not be physical units, and may reside at one location or may be distributed to multiple networked units. Some or all of the units may be selectively adopted according to practical needs to achieve desired objectives of the solutions of embodiments.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such

as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

**1.** A wireless communication method, comprising:

determining, by a first device according to state information of the first device, whether to initiate transmission opportunity (TXOP) sharing or to initiate a frame exchange with a second device,
wherein the first device and the second device communicate via a relay device, a basic service set (BSS) where a link between the first device and the relay device is located is a first BSS, a BSS where a link between the second device and the relay device is located is a relay BSS, and the state information of the first device comprises one or more of:

first state information for indicating predicted duration information of future media traffic generated due to frame transmission by a station within the first BSS;
second state information for indicating predicted duration information of future media traffic generated due to frame transmission by a station within the relay BSS; and
third state information for indicating predicted duration information of future media traffic generated due to frame transmission by a station within an overlapping basic service set (OBSS), in which the first device is located, except the first BSS and the relay BSS.

**2.** The method of claim 1, wherein

the first state information is indicated by a first network allocation vector (NAV);
the second state information is indicated by a second NAV; and
the third state information is indicated by a third NAV.

**3.** The method of claim 2, further comprising:

updating, by the first device, the first NAV in a case that a first frame received by the first device satisfies a first condition,
wherein the first condition comprises that:

the first frame is a frame transmitted within the first BSS;
a duration indicated by the first frame is greater than a current value of the first NAV; and
a receiver address of the first frame is not an address of the first device; or, the first device is not a holder of the TXOP and a physical layer protocol data unit (PPDU) carrying the first frame does not contain a frame requesting an immediate response from the first device; or, the first device is not the holder of the TXOP and the first frame is a trigger frame.

**4.** The method of claim 2 or 3, further comprising:

updating, by the first device, the second NAV in a case that a second frame received by the first device satisfies a second condition,
wherein the second condition comprises that:

the second frame is a frame transmitted within the relay BSS;
a duration indicated by the second frame is greater than a current value of the second NAV; and
a receiver address of the second frame is not an address of the first device.

**5.** The method of any one of claims 2 to 4, further comprising:

updating, by the first device, the third NAV in a case that a third frame received by the first device satisfies a third

condition,
wherein the third condition comprises that:

the third frame is a frame transmitted within an OBSS where the first device is located, and the third frame is not a frame transmitted within the relay BSS;
a duration indicated by the third frame is greater than a current value of the third NAV; and
a receiver address of the third frame is not an address of the first device.

**6.** The method of any one of claims 1 to 5, wherein determining, by the first device according to the state information of the first device, whether to initiate TXOP sharing or to initiate the frame exchange with the second device comprises:

in a case that one or more of the first state information, the second state information, and the third state information are non-zero, not initiating, by the first device, the TXOP sharing or not initiating, by the first device, the frame exchange with the second device; and/or
in a case that the first state information, the second state information, and the third state information are all zero, initiating, by the first device, the TXOP sharing or initiating, by the first device, the frame exchange with the second device.

**7.** The method of any one of claims 1 to 6, further comprising:

receiving, by the first device, a first indication frame,
wherein the first indication frame is used to indicate the second state information.

**8.** The method of claim 7, wherein the first indication frame is a control frame.

**9.** The method of claim 8, wherein a duration field of the control frame is used to indicate a first duration, and the first duration is related to updating the second state information.

**10.** The method of claim 9, wherein the second state information is indicated by a second NAV, and the first duration satisfies that:

the first duration = an indicated updated second NAV duration - (a transmission duration of the first indication frame + a duration offset).

**11.** The method of claim 10, wherein the duration offset is a short inter-frame space (SIFS) duration.

**12.** The method of any one of claims 7 to 11, wherein a type of the first indication frame is indicated by a combination of at least two of following frame control fields in the first indication frame:

type;
subtype; and
control frame extension.

**13.** The method of any one of claims 7 to 12, wherein the first indication frame comprises a first field, and the first field is used to indicate channel information or information of a sub-band of the relay BSS.

**14.** The method of claim 13, wherein the information of the sub-band comprises one or more of:

a first channel number of the sub-band; and
a number of channels of the sub-band.

**15.** The method of any one of claims 1 to 14, wherein the link between the first device and the relay device comprises a peer-to-peer (P2P) link, and/or the link between the second device and the relay device comprises a P2P link.

**16.** The method of any one of claims 1 to 15, wherein the first device comprises a device providing distribution system service (DSS) access.

**17.** The method of any one of claims 1 to 16, further comprising:
maintaining, by the first device, the state information of the first device.

**18.** A wireless communication method, comprising:

determining, by a second device according to state information of the second device, whether to respond to transmission opportunity (TXOP) sharing initiated by a first device or whether to initiate a frame exchange with the first device,
wherein the first device and the second device communicate via a relay device, a basic service set (BSS) where a link between the second device and the relay device is located is a second BSS, a BSS where a link between the first device and the relay device is located is a relay BSS, and the state information of the second device comprises one or more of:

fourth state information for indicating predicted duration information of future media traffic generated due to frame transmission by a station within the second BSS;
fifth state information for indicating predicted duration information of future media traffic generated due to frame transmission by a station within the relay BSS; and
sixth state information for indicating predicted duration information of future media traffic generated due to frame transmission by a station within an overlapping basic service set (OBSS), in which the second device is located, except the second BSS and the relay BSS.

**19.** The method of claim 18, wherein:

the fourth state information is indicated by a fourth network allocation vector (NAV);
the fifth state information is indicated by a fifth NAV; and
the sixth state information is indicated by a sixth NAV.

**20.** The method of claim 19, further comprising:

updating, by the second device, the fourth NAV in a case that a fourth frame received by the second device satisfies a fourth condition,
wherein the fourth condition comprises that:

the fourth frame is a frame transmitted within the second BSS;
a duration indicated by the fourth frame is greater than a current value of the fourth NAV; and
a receiver address of the fourth frame is not an address of the second device; or, the second device is not a holder of the TXOP and a physical layer protocol data unit (PPDU) carrying the fourth frame does not contain a frame requesting an immediate response from the second device; or, the second device is not the holder of the TXOP and the fourth frame is a trigger frame.

**21.** The method of claim 19 or 20, further comprising:

updating, by the second device, the fifth NAV in a case that a fifth frame received by the second device satisfies a fifth condition,
wherein the fifth condition comprises:

the fifth frame is a frame transmitted within the relay BSS;
a duration indicated by the fifth frame is greater than a current value of the fifth NAV; and
a receiver address of the fifth frame is not an address of the second device.

**22.** The method of any one of claims 19 to 21, further comprising:

updating, by the second device, the sixth NAV in a case that a sixth frame received by the second device satisfies a sixth condition,
wherein the sixth condition comprises that:

the sixth frame is a frame transmitted within an OBSS where the second device is located, and the sixth frame is not a frame transmitted within the relay BSS;

a duration indicated by the sixth frame is greater than a current value of the sixth NAV; and
a receiver address of the sixth frame is not an address of the second device.

**23.** The method of any one of claims 18 to 22, wherein determining, by the second device according to the state information of the second device, whether to respond to the TXOP sharing initiated by the first device or whether to initiate the frame exchange with the first device comprises:

in a case that one or more of the fourth state information, the fifth state information, and the sixth state information are non-zero, not responding to, by the second device, the TXOP sharing or not initiating, by the second device, the frame exchange with the first device; and/or
in a case that the fourth state information, the fifth state information, and the sixth state information are all zero, responding to, by the second device, the TXOP sharing or initiating, by the second device, the frame exchange with the first device.

**24.** The method of any one of claims 18 to 23, further comprising:

receiving, by the second device, a second indication frame,
wherein the second indication frame is used to indicate the fifth state information.

**25.** The method of claim 24, wherein the second indication frame is a control frame.

**26.** The method of claim 25, wherein a duration field of the control frame is used to indicate a second duration, and the second duration is related to updating the fifth state information.

**27.** The method of claim 26, wherein the fifth state information is indicated by a fifth NAV, and the second duration satisfies that:
the second duration = an indicated updated fifth NAV duration - (a transmission duration of the second indication frame + a duration offset).

**28.** The method of claim 27, wherein the duration offset is a short interframe space (SIFS) duration.

**29.** The method of any one of claims 24 to 28, wherein a type of the second indication frame is indicated by a combination of at least two of following frame control fields in the second indication frame:

type;
subtype; and
control frame extension.

**30.** The method of any one of claims 24 to 29, wherein the second indication frame comprises a second field, and the second field is used to indicate channel information or information of a sub-band of the relay BSS.

**31.** The method of claim 30, wherein the information of the sub-band comprises one or more of:

a first channel number of the sub-band; and
a number of channels of the sub-band.

**32.** The method of any one of claims 18 to 31, wherein the link between the first device and the relay device comprises a peer-to-peer (P2P) link, and/or the link between the second device and the relay device comprises a P2P link.

**33.** The method of any one of claims 18 to 32, wherein the first device comprises a device providing distribution system service (DSS) access.

**34.** The method of any one of claims 18 to 33, further comprising:
maintaining, by the second device, the state information of the second device.

**35.** A wireless communication method, comprising:

determining, by a relay device according to state information of a third device, whether to respond to transmission

opportunity (TXOP) sharing initiated by a first device or respond to a frame exchange between the first device and a second device,
wherein the third device belongs to the relay device, and the relay device is used to implement communication between the first device and the second device,
wherein in a case that the third device and the first device communicate via a link, a basic service set (BSS) where the link between the third device and the first device is located is a third BSS, and a BSS where a link between the relay device and the second device is located is a relay BSS,
wherein in a case that the third device and the second device communicate via a link, a BSS where the link between the third device and the second device is located is a third BSS, and a BSS where a link between the relay device and the first device is located is a relay BSS, and
wherein the state information of the third device comprises one or more of:

seventh state information for indicating predicted duration information of future media traffic generated due to frame transmission by a station within the third BSS;
eighth state information for indicating predicted duration information of future media traffic generated due to frame transmission by a station within the relay BSS; and
ninth state information for indicating predicted duration information of future media traffic generated due to frame transmission by a station within an overlapping basic service set (OBSS), in which the third device is located, except the third BSS and the relay BSS.

**36.** The method of claim 35, wherein

the seventh state information is indicated by a seventh network allocation vector (NAV);
the eighth state information is indicated by an eighth NAV; and
the ninth state information is indicated by a ninth NAV.

**37.** The method of claim 36, further comprising:

updating, by the third device, the seventh NAV in a case that a seventh frame received by the third device satisfies a seventh condition,
wherein the seventh condition comprises that:

the seventh frame is a frame transmitted within the third BSS;
a duration indicated by the seventh frame is greater than a current value of the seventh NAV; and
a receiver address of the seventh frame is not an address of the third device; or, the third device is not a holder of the TXOP and a physical layer protocol data unit (PPDU) carrying the seventh frame does not contain a frame requesting an immediate response from the third device; or, the third device is not the holder of the TXOP and the seventh frame is a trigger frame.

**38.** The method of claim 36 or 37, further comprising:

updating, by the third device, the eighth NAV in a case that an eighth frame received by the third device satisfies an eighth condition,
wherein the eighth condition comprises that:

the eighth frame is a frame transmitted within the relay BSS;
a duration indicated by the eighth frame is greater than a current value of the eighth NAV; and
a receiver address of the eighth frame is not an address of the third device.

**39.** The method of any one of claims 36 to 37, further comprising:

updating, by the third device, the ninth NAV in a case that a ninth frame received by the third device satisfies a ninth condition,
wherein the ninth condition comprises that:

the ninth frame is a frame transmitted within an OBSS where the third device is located, and the ninth frame is not a frame transmitted within the relay BSS;
a duration indicated by the ninth frame is greater than a current value of the ninth NAV; and

a receiver address of the ninth frame is not an address of the third device.

**40.** The method of any one of claims 35 to 39, wherein determining, by the relay device according to the state information of the third device, whether to respond to the TXOP sharing initiated by the first device or respond to the frame exchange between the first device and the second device comprises:

in a case that one or more of the seventh state information, the eighth state information, and the ninth state information are non-zero, not responding to, by the relay device, the TXOP sharing or not responding to, by the relay device, the frame exchange between the first device and the second device; and/or
in a case that the seventh state information, the eighth state information, and the ninth state information are all zero, responding to, by the relay device, the TXOP sharing or responding to, by the relay device, the frame exchange between the first device and the second device.

**41.** The method of any one of claims 35 to 39, wherein determining, by the relay device according to the state information of the third device, whether to respond to the TXOP sharing initiated by the first device or respond to the frame exchange between the first device and the second device comprises:

determining, by the relay device according to the state information of the third device and state information of a fourth device, whether to respond to the TXOP sharing initiated by the first device or respond to the frame exchange between the first device and the second device,
wherein the fourth device belongs to the relay device, the third device and the first device communicate via a link, and the fourth device and the second device communicate via a link,
wherein a BSS where the link between the fourth device and the second device is located is a fourth BSS, a BSS where a link between the relay device and the first device is located is a fifth BSS, and
wherein the state information of the fourth device comprises one or more of:

tenth state information for indicating predicted duration information of future media traffic generated due to frame transmission by a station within the fourth BSS;
eleventh state information for indicating predicted duration information of future media traffic generated due to frame transmission by a station within the fifth BSS; and
twelfth state information for indicating predicted duration information of future media traffic generated due to frame transmission by a station within an OBSS, in which the fourth device is located, except the fourth BSS and the fifth BSS.

**42.** The method of claim 41, wherein determining, by the relay device according to the state information of the third device and the state information of the fourth device, whether to respond to the TXOP sharing initiated by the first device or respond to the frame exchange between the first device and the second device comprises one or more of:

in a case that the twelfth state information is non-zero and the first device indicates that carrier sense is required, not responding to, by the relay device, the TXOP sharing or not responding to, by the relay device, the frame exchange between the first device and the second device;
in a case that the eighth state information is non-zero, not responding to, by the relay device, the TXOP sharing or not responding to, by the relay device, the frame exchange between the first device and the second device;
in a case that the eighth state information, the ninth state information, the tenth state information, and the twelfth state information are all zero, responding to, by the relay device, the TXOP sharing or responding to, by the relay device, the frame exchange between the first device and the second device; and
in a case that the eighth state information and the tenth state information are both zero and the ninth state information and/or the twelfth state information are non-zero, and that the first device indicates that carrier sense is not required, responding to, by the relay device, the TXOP sharing or responding to, by the relay device, the frame exchange between the first device and the second device.

**43.** The method of any one of claims 35 to 42, further comprising:

transmitting, by the relay device, a second indication frame and/or a first indication frame,
wherein the first indication frame is used to indicate second state information, and the second state information is used for indicating predicted duration information of future media traffic generated due to frame transmission by a station within a relay BSS of the first device, and
wherein the second indication frame is used to indicate fifth state information, and the fifth state information is

used for indicating predicted duration information of future media traffic generated due to frame transmission by a station within a relay BSS of the second device.

**44.** The method of claim 43, wherein

the first indication frame is a control frame; and
the second indication frame is a control frame.

**45.** The method of claim 44, wherein

a duration field of the first indication frame is used to indicate a first duration, and the first duration is related to updating the second state information; and
a duration field of the second indication frame is used to indicate a second duration, and the second duration is related to updating the fifth state information.

**46.** The method of claim 45, wherein

the second state information is indicated by a second NAV, and the first duration satisfies that: the first duration = an indicated updated second NAV duration - (a transmission duration of the first indication frame + a duration offset); and
the fifth state information is indicated by a fifth NAV, and the second duration satisfies that: the second duration = an indicated updated fifth NAV duration - (a transmission duration of the second indication frame + a duration offset).

**47.** The method of claim 46, wherein the duration offset is a short interframe space (SIFS) duration.

**48.** The method of any one of claims 43 to 47, wherein

a type of the first indication frame is indicated by a combination of at least two of following frame control fields in the first indication frame: type, subtype, and control frame extension; and
a type of the second indication frame is indicated by a combination of at least two of following frame control fields in the second indication frame: type, subtype, and control frame extension.

**49.** The method of any one of claims 43 to 48, wherein

the first indication frame comprises a first field, and the first field is used to indicate channel information or information of a sub-band of the relay BSS of the first device; and.
the second indication frame comprises a second field, and the second field is used to indicate channel information or information of a sub-band of the relay BSS of the second device.

**50.** The method of claim 49, wherein the information of the sub-band comprises one or more of:

a first channel number of the sub-band;
a number of channels of the sub-band.

**51.** The method of any one of claims 35 to 50, wherein the link between the first device and the relay device comprises a peer-to-peer (P2P) link, and/or the link between the second device and the relay device comprises a P2P link.

**52.** The method of any one of claims 35 to 51, wherein the first device comprises a device providing distribution system service (DSS) access.

**53.** The method of any one of claims 35 to 52, further comprising:

maintaining, by the relay device, the state information of the third device.

**54.** A communication device, wherein the communication device is a first device and comprises:

a first determining unit configured to determine, according to state information of the first device, whether to initiate

transmission opportunity (TXOP) sharing,
wherein the first device and the second device communicate via a relay device, a basic service set (BSS) where a link between the first device and the relay device is located is a first BSS, a BSS where a link between the second device and the relay device is located is a relay BSS, and the state information of the first device comprises one or more of:

first state information for indicating predicted duration information of future media traffic generated due to frame transmission by a station within the first BSS;
second state information for indicating predicted duration information of future media traffic generated due to frame transmission by a station within the relay BSS; and
third state information for indicating predicted duration information of future media traffic generated due to frame transmission by a station within an overlapping basic service set (OBSS), in which the first device is located, except the first BSS and the relay BSS.

**55.** The device of claim 54, wherein

the first state information is indicated by a first network allocation vector (NAV);
the second state information is indicated by a second NAV; and
the third state information is indicated by a third NAV.

**56.** The device of claim 55, wherein the device is further configured to:

update the first NAV in a case that a first frame received by the first device satisfies a first condition,
wherein the first condition comprises that:

the first frame is a frame transmitted within the first BSS;
a duration indicated by the first frame is greater than a current value of the first NAV; and
a receiver address of the first frame is not an address of the first device; or, the first device is not a holder of the TXOP and a physical layer protocol data unit (PPDU) carrying the first frame does not contain a frame requesting an immediate response from the first device; or, the first device is not the holder of the TXOP and the first frame is a trigger frame.

**57.** The device of claim 55 or 56, wherein the device is further configured to:

update the second NAV in a case that a second frame received by the first device satisfies a second condition,
wherein the second condition comprises that:

the second frame is a frame transmitted within the relay BSS;
a duration indicated by the second frame is greater than a current value of the second NAV; and
a receiver address of the second frame is not an address of the first device.

**58.** The device of any one of claims 55 to 57, wherein the device is further configured to:

update the third NAV in a case that a third frame received by the first device satisfies a third condition,
wherein the third condition comprises that:

the third frame is a frame transmitted within an OBSS where the first device is located, and the third frame is not a frame transmitted within the relay BSS;
a duration indicated by the third frame is greater than a current value of the third NAV; and
a receiver address of the third frame is not an address of the first device.

**59.** The device of any one of claims 54 to 58, wherein the first determining unit is specifically configured to:

in a case that one or more of the first state information, the second state information, and the third state information are non-zero, not initiate the TXOP sharing or not initiate the frame exchange with the second device; and/or
in a case that the first state information, the second state information, and the third state information are all zero, initiate the TXOP sharing or initiate the frame exchange with the second device.

**60.** The device of any one of claims 54 to 59, wherein the device is further configured to:

receive a first indication frame,
wherein the first indication frame is used to indicate the second state information.

**61.** The device of claim 60, wherein the first indication frame is a control frame.

**62.** The device of claim 61, wherein a duration field of the control frame is used to indicate a first duration, and the first duration is related to updating the second state information.

**63.** The device of claim 62, wherein the second state information is indicated by a second NAV, and the first duration satisfies that:

the first duration = an indicated updated second NAV duration - (a transmission duration of the first indication frame + a duration offset).

**64.** The device of claim 63, wherein the duration offset is a short inter-frame space (SIFS) duration.

**65.** The device of any one of claims 60 to 64, wherein a type of the first indication frame is indicated by a combination of at least two of following frame control fields in the first indication frame:

type;
subtype; and
control frame extension.

**66.** The device of any one of claims 60 to 65, wherein the first indication frame comprises a first field, and the first field is used to indicate channel information or information of a sub-band of the relay BSS.

**67.** The device of claim 66, wherein the information of the sub-band comprises one or more of:

a first channel number of the sub-band; and
a number of channels of the sub-band.

**68.** The device of any one of claims 54 to 67, wherein the link between the first device and the relay device comprises a peer-to-peer (P2P) link, and/or the link between the second device and the relay device comprises a P2P link.

**69.** The device of any one of claims 54 to 68, wherein the first device comprises a device providing distribution system service (DSS) access.

**70.** The device of any one of claims 54 to 69, wherein the device is further configured to:
maintain the state information of the first device.

**71.** A communication device, wherein the communication device is a second device and comprises:

a second determining unit configured to determine, according to state information of the second device, whether to respond to transmission opportunity (TXOP) sharing initiated by a first device or whether to initiate a frame exchange with the first device,
wherein the first device and the second device communicate via a relay device, a basic service set (BSS) where a link between the second device and the relay device is located is a second BSS, a BSS where a link between the first device and the relay device is located is a relay BSS, and the state information of the second device comprises one or more of:

fourth state information for indicating predicted duration information of future media traffic generated due to frame transmission by a station within the second BSS;
fifth state information for indicating predicted duration information of future media traffic generated due to frame transmission by a station within the relay BSS; and

sixth state information for indicating predicted duration information of future media traffic generated due to frame transmission by a station within an overlapping basic service set (OBSS), in which the second device is located, except the second BSS and the relay BSS.

**72.** The device of claim 71, wherein:

the fourth state information is indicated by a fourth network allocation vector (NAV);
the fifth state information is indicated by a fifth NAV; and
the sixth state information is indicated by a sixth NAV.

**73.** The device of claim 72, wherein the device is further configured to:

update the fourth NAV in a case that a fourth frame received by the second device satisfies a fourth condition, wherein the fourth condition comprises that:

the fourth frame is a frame transmitted within the second BSS;
a duration indicated by the fourth frame is greater than a current value of the fourth NAV; and
a receiver address of the fourth frame is not an address of the second device; or, the second device is not a holder of the TXOP and a physical layer protocol data unit (PPDU) carrying the fourth frame does not contain a frame requesting an immediate response from the second device; or, the second device is not the holder of the TXOP and the fourth frame is a trigger frame.

**74.** The device of claim 72 or 73, wherein the device is further configured to:

update the fifth NAV in a case that a fifth frame received by the second device satisfies a fifth condition, wherein the fifth condition comprises that:

the fifth frame is a frame transmitted within the relay BSS;
a duration indicated by the fifth frame is greater than a current value of the fifth NAV; and
a receiver address of the fifth frame is not an address of the second device.

**75.** The device of any one of claims 72 to 74, wherein the device is further configured to:

update the sixth NAV in a case that a sixth frame received by the second device satisfies a sixth condition, wherein the sixth condition comprises that:

the sixth frame is a frame transmitted within an OBSS where the second device is located, and the sixth frame is not a frame transmitted within the relay BSS;
a duration indicated by the sixth frame is greater than a current value of the sixth NAV; and
a receiver address of the sixth frame is not an address of the second device.

**76.** The device of any one of claims 71 to 75, wherein the second determining unit is specifically configured to:

in a case that one or more of the fourth state information, the fifth state information, and the sixth state information are non-zero, not respond the TXOP sharing or not initiate the frame exchange with the first device; and/or
in a case that the fourth state information, the fifth state information, and the sixth state information are all zero, respond to the TXOP sharing or initiatie the frame exchange with the first device.

**77.** The device of any one of claims 71 to 76, wherein the device is further configured to:

receive a second indication frame,
wherein the second indication frame is used to indicate the fifth state information.

**78.** The device of claim 77, wherein the second indication frame is a control frame.

**79.** The device of claim 78, wherein a duration field of the control frame is used to indicate a second duration, and the second duration is related to updating the fifth state information.

**80.** The device of claim 79, wherein the fifth state information is indicated by a fifth NAV, and the second duration satisfies that:
the second duration = an indicated updated fifth NAV duration - (a transmission duration of the second indication frame + a duration offset).

**81.** The device of claim 80, wherein the duration offset is a short interframe space (SIFS) duration.

**82.** The device of any one of claims 77 to 81, wherein a type of the second indication frame is indicated by a combination of at least two of following frame control fields in the second indication frame:

type;
subtype; and
control frame extension.

**83.** The device of any one of claims 77 to 82, wherein the second indication frame comprises a second field, and the second field is used to indicate channel information or information of a sub-band of the relay BSS.

**84.** The device of claim 83, wherein the information of the sub-band comprises one or more of:

a first channel number of the sub-band; and
a number of channels of the sub-band.

**85.** The device of any one of claims 71 to 84, wherein the link between the first device and the relay device comprises a peer-to-peer (P2P) link, and/or the link between the second device and the relay device comprises a P2P link.

**86.** The device of any one of claims 71 to 85, wherein the first device comprises a device providing distribution system service (DSS) access.

**87.** The device of any one of claims 71 to 86, wherein the device is further configured to:
maintain the state information of the second device.

**88.** A communication device, wherein the communication device is a relay device and comprises:

a third determining unit configured to determine, according to state information of a third device, whether to respond to transmission opportunity (TXOP) sharing initiated by a first device or respond to a frame exchange between the first device and a second device,
wherein the third device belongs to the relay device, and the relay device is used to implement communication between the first device and the second device,
wherein in a case that the third device and the first device communicate via a link, a basic service set (BSS) where the link between the third device and the first device is located is a third BSS, and a BSS where a link between the relay device and the second device is located is a relay BSS,
wherein in a case that the third device and the second device communicate via a link, a BSS where the link between the third device and the second device is located is a third BSS, and a BSS where a link between the relay device and the first device is located is a relay BSS, and
wherein the state information of the third device comprises one or more of:

seventh state information for indicating predicted duration information of future media traffic generated due to frame transmission by a station within the third BSS;
eighth state information for indicating predicted duration information of future media traffic generated due to frame transmission by a station within the relay BSS; and
ninth state information for indicating predicted duration information of future media traffic generated due to frame transmission by a station within an overlapping basic service set (OBSS), in which the third device is located, except the third BSS and the relay BSS.

**89.** The device of claim 88, wherein

the seventh state information is indicated by a seventh network allocation vector (NAV);
the eighth state information is indicated by an eighth NAV; and

the ninth state information is indicated by a ninth NAV.

**90.** The device of claim 89, wherein the device is further configured to:

update the seventh NAV in a case that a seventh frame received by the third device satisfies a seventh condition, wherein the seventh condition comprises that:

the seventh frame is a frame transmitted within the third BSS;
a duration indicated by the seventh frame is greater than a current value of the seventh NAV; and
a receiver address of the seventh frame is not an address of the third device; or, the third device is not a holder of the TXOP and a physical layer protocol data unit (PPDU) carrying the seventh frame does not contain a frame requesting an immediate response from the third device; or, the third device is not the holder of the TXOP and the seventh frame is a trigger frame.

**91.** The device of claim 89 or 90, wherein the device is further configured to:

update the eighth NAV in a case that an eighth frame received by the third device satisfies an eighth condition, wherein the eighth condition comprises that:

the eighth frame is a frame transmitted within the relay BSS;
a duration indicated by the eighth frame is greater than a current value of the eighth NAV; and
a receiver address of the eighth frame is not an address of the third device.

**92.** The device of any one of claims 89 to 91, wherein the device is further configured to:

update the ninth NAV in a case that a ninth frame received by the third device satisfies a ninth condition, wherein the ninth condition comprises that:

the ninth frame is a frame transmitted within an OBSS where the third device is located, and the ninth frame is not a frame transmitted within the relay BSS;
a duration indicated by the ninth frame is greater than a current value of the ninth NAV; and
a receiver address of the ninth frame is not an address of the third device.

**93.** The device of any one of claims 88 to 92, wherein the third determining unit is specifically configured to perform one or more of:

in a case that one or more of the seventh state information, the eighth state information, and the ninth state information are non-zero, not responding to, by the relay device, the TXOP sharing or not responding to, by the relay device, the frame exchange between the first device and the second device; and/or
in a case that the seventh state information, the eighth state information, and the ninth state information are all zero, responding to, by the relay device, the TXOP sharing or responding to, by the relay device, the frame exchange between the first device and the second device.

**94.** The device of any one of claims 88 to 92, wherein the third determining unit is specifically configured to perform one or more of:

determining, according to the state information of the third device and state information of a fourth device, whether to respond to the TXOP sharing initiated by the first device or respond to the frame exchange between the first device and the second device,
wherein the fourth device belongs to the relay device, the third device and the first device communicate via a link, and the fourth device and the second device communicate via a link,
wherein a BSS where the link between the fourth device and the second device is located is a fourth BSS, a BSS where a link between the relay device and the first device is located is a fifth BSS, and
wherein the state information of the fourth device comprises one or more of:

tenth state information for indicating predicted duration information of future media traffic generated due to frame transmission by a station within the fourth BSS;
eleventh state information for indicating predicted duration information of future media traffic generated due

to frame transmission by a station within the fifth BSS; and
twelfth state information for indicating predicted duration information of future media traffic generated due to frame transmission by a station within an OBSS, in which the fourth device is located, except the fourth BSS and the fifth BSS.

**95.** The device of claim 94, wherein the third determining unit is specifically configured to perform one or more of:

in a case that the twelfth state information is non-zero and the first device indicates that carrier sense is required, not responding to the TXOP sharing or not responding to the frame exchange between the first device and the second device;
in a case that the eighth state information is non-zero, not responding to the TXOP sharing or not responding to the frame exchange between the first device and the second device;
in a case that the eighth state information, the ninth state information, the tenth state information, and the twelfth state information are all zero, responding to the TXOP sharing or responding to the frame exchange between the first device and the second device; and
in a case that the eighth state information and the tenth state information are both zero and the ninth state information and/or the twelfth state information are non-zero, and that the first device indicates that carrier sense is not required, responding to the TXOP sharing or responding to the frame exchange between the first device and the second device.

**96.** The device of any one of claims 88 to 95, wherein the device is further configured to:

transmit a second indication frame and/or a first indication frame,
wherein the first indication frame is used to indicate second state information, and the second state information is used for indicating predicted duration information of future media traffic generated due to frame transmission by a station within a relay BSS of the first device, and
wherein the second indication frame is used to indicate fifth state information, and the fifth state information is used for indicating predicted duration information of future media traffic generated due to frame transmission by a station within a relay BSS of the second device.

**97.** The device of claim 96, wherein

the first indication frame is a control frame; and
the second indication frame is a control frame.

**98.** The device of claim 97, wherein

a duration field of the first indication frame is used to indicate a first duration, and the first duration is related to updating the second state information; and
a duration field of the second indication frame is used to indicate a second duration, and the second duration is related to updating the fifth state information.

**99.** The device of claim 98, wherein

the second state information is indicated by a second NAV, and the first duration satisfies that: the first duration = an indicated updated second NAV duration - (a transmission duration of the first indication frame + a duration offset); and
the fifth state information is indicated by a fifth NAV, and the second duration satisfies that: the second duration = an indicated updated fifth NAV duration - (a transmission duration of the second indication frame + a duration offset).

**100.**
The device of claim 99, wherein the duration offset is a short interframe space (SIFS) duration.

**101.**
The device of any one of claims 96 to 100, wherein

a type of the first indication frame is indicated by a combination of at least two of following frame control fields in the

first indication frame: type, subtype, and control frame extension; and
a type of the second indication frame is indicated by a combination of at least two of following frame control fields in the second indication frame: type, subtype, and control frame extension.

**102.**
The device of any one of claims 96 to 101, wherein

the first indication frame comprises a first field, and the first field is used to indicate channel information or information of a sub-band of the relay BSS of the first device; and.
the second indication frame comprises a second field, and the second field is used to indicate channel information or information of a sub-band of the relay BSS of the second device.

**103.**
The device of claim 102, wherein the information of the sub-band comprises one or more of:

a first channel number of the sub-band;
a number of channels of the sub-band.

**104.**
The device of any one of claims 88 to 103, wherein the link between the first device and the relay device comprises a peer-to-peer (P2P) link, and/or the link between the second device and the relay device comprises a P2P link.

**105.**
The device of any one of claims 88 to 104, wherein the first device comprises a device providing distribution system service (DSS) access.

**106.**
The device of any one of claims 88 to 105, wherein the device is further configured to:
maintain the state information of the third device.

**107.**
A communication device, comprising a memory and a processor, the memory being configured to store a program, and the processor being configured to invoke the program in the memory to cause the communication device to execute the method of any one of claims 1 to 53.

**108.**
An apparatus, comprising a processor configured to invoke a program from a memory to cause the apparatus to execute the method of any one of claims 1 to 53.

**109.**
A chip, comprising a processor configured to invoke a program from a memory to cause a device installed with the chip to execute the method of any one of claims 1 to 53.

**110.**
A computer-readable storage medium having a program stored thereon, the program being operable with a computer to execute the method of any one of claims 1 to 53.

**111.** A computer-program product, comprising a program that is operable with a computer to execute the method of any one of claims 1 to 53.

**112.**
A computer program, operable with a computer to execute the method of any one of claims 1 to 53.

100
AP 111
AP 112
STA 121
STA 122

FIG. 1

rSTA
sSTA
destination station

FIG. 2

tSTA
rSTA
Destination station
Frame exchange for Relay TXOP potection
S310
1st hop frame
S320
1st hop BA frame
S330
2nd hop frame
S340
2nd hop BA frame
S350
E2E BA frame

FIG. 3

Upper
BSS
S1G relay STA
relay
function
Local
LLC
S1G relay AP
Lower
BSS
Root AP
Relay 1
Relay 2
STA1
Relay 3
STA4
STA5
STA2
STA3

FIG. 4

RelayedFrame field=X
AckInd=00
S501
DATA
SIFS
AP
RelayedFrame field=1
AckInd=11
RelayedFrame field=0
AckInd=00
S502
S503
ACK
SIFS
DATA
SIFS
RELAY
RelayedFrame field=0
AckInd=10
S504
ACK
STA

FIG. 5A

RelayedFrame field=0
AckInd=10
S514
ACK
AP
RelayedFrame field=0
AckInd=00
RelayedFrame field=1
AckInd=11
S512
S513
ACK
SIFS
DATA
SIFS
RELAY
RelayedFrame field=X
AckInd=00
S511
DATA
SIFS
STA

FIG. 5B

RelayedFrame field=1
AckInd=11
S521
DATA
SIFS
AP
RelayedFrame field=0
AckInd=00
S522
DATA
SIFS
RELAY
RelayedFrame field=0
AckInd=10
S523
ACK
STA

FIG. 5C

RelayedFrame field=0
AckInd=10
S533
ACK
AP
RelayedFrame field=0
AckInd=00
S532
DATA
SIFS
RELAY
RelayedFrame field=1
AckInd=11
S531
DATA
SIFS
STA

FIG. 5D

S610
TXOP sharing
SIFS
SIFS
S630
PPDU1
SIFS
AP
S620
CTS
S640
ACK
SIFS
S650
PPDU2
SIFS
S670
ACK
Relay STA
S660
SIFS
ACK
Non-AP STA

FIG. 6

determine whether to initiate TXOP sharing according to state information of first device

S710

FIG. 7A

determine whether to respond to TXOP sharing initiated by first device according to state information of second device

S750

FIG. 7B

determine whether to respond to TXOP sharing initiated by first device according to state information of third device

S790

FIG. 7C

uSTA
RELAY
dSTA
UPLINK
DOWNLINK
DS
puSTA
pdSTA

FIG. 8A

Relay non-AP STA
RELAY
Relay AP
UPLINK
DOWNLINK
DS
Root AP/other relay AP/other relay non-AP STA
non-AP STA

FIG. 8B

Relay
non-AP
STA
RELAY
Relay
non-AP
STA
UPLINK
DOWNLINK
DS
Root AP/other relay AP/other relay non-AP STA
non-AP STA

FIG. 8C

BSS where uplink is
(Upper BSS)
uSTA2
Relay function
Local
LLC
dSTA2
BSS where downlink is
(Lower BSS)
AP（puSTA, may be root AP）
BSS where uplink is
(Upper BSS)
uplink
uplink
uSTA1
Relay device 1
（Relay1）
Relay device 2
（Relay2）
Local
LLC
Relay function
downlink
downlink
dSTA1
STA2
（pdSTA）
STA3
（pdSTA）
STA4
（pdSTA）
BSS where downlink is
(Lower BSS)

FIG. 8D

verify NAV value before initiating relay-based TXS
initiate relay-based TXS when intra-BSS NAV, relay-BSS NAV, and OBSS-except-relay-BSS NAV are all 0
MU RTS TXS (relay)
PPDU1
Operating channels are C1+C2+C3
puSTA
uplink
STA update corresponding NAV based on received PPDU
CTS
ACK 1
ACK 3
uSTA
Relay
dSTA
uplink
downlink
Verify that relay-BSS NAV of uSTA is 0 and OBSS-except-relay-BSS NAV is 0
PPDU2
Verify that intra-BSS NAV of dSTA is 0, and OBSS-except-relay-BSS NAV of dSTA is 0
ACK 2
pdSTA
downlink
Operating channels are C1+C2

FIG. 9

Verify that intra-BSS NAV and OBSS-except-relay-BSS NAV of uSTA are 0 and OBSS-except-relay-BSS NAV and relay-BSS NAV of dSTA are 0
ACK2
Operating channels are C1+C2+C3
puSTA
uplink
PPDU2
uSTA
Relay
dSTA
uplink
downlink
STA update corresponding NAV based on received PPDU
CTS (relay)
ACK1
ACK3
RTS (relay)
PPDU1
pdSTA
downlink
Operating channels are C1+C2
Verify NAV value before initiating relay-based TXS

FIG. 10

| | Frame Control | Duration | RA | TA | Relay-BSS subband first channel number | Relay-BSS subband channel number | FCS |
|---|---|---|---|---|---|---|---|
| Octets: | 2 | 2 | 6 | 6 | 1 | 1 | 4 |

FIG. 11

| | Protocol version | Type | Subtype | Control Frame Extension | Power Management | More Data | Protected frame | +HTC |
|---|---|---|---|---|---|---|---|---|
| Bits: | 2 | 2 | 4 | 4 | 1 | 1 | 1 | 1 |

FIG. 12

COMMUNICATION DEVICE 1300

FIRST DETERMINING UNIT 1310

FIG. 13

COMMUNICATION DEVICE 1400

SECOND DETERMINING UNIT 1410

FIG. 14

COMMUNICATION
DEVICE 1500
THIRD
DETERMINING
UNIT 1510

FIG. 15

APPARATUS 1600
PROCESSOR
1610
MEMORY
1620
TRANSCEIVER
1630

FIG. 16

**INTERNATIONAL SEARCH REPORT**

International application No. **PCT/CN2023/124091**

**A. CLASSIFICATION OF SUBJECT MATTER**

H04W 56/00(2009.01)i

According to International Patent Classification (IPC) or to both national classification and IPC

**B. FIELDS SEARCHED**

Minimum documentation searched (classification system followed by classification symbols)

IPC： H04W

Documentation searched other than minimum documentation to the extent that such documents are included in the fields searched

Electronic data base consulted during the international search (name of data base and, where practicable, search terms used)

CNTXT; VEN; USTXT; EPTXT; WOTXT; CNKI; 3GPP: 传输机会共享, 中继, 基本服务集, 状态, 同步, TXOP sharing, Transmission Opportunity, relay, BSS, basic service set, OBSS, overlapping basic service set, state, synchronization

**C. DOCUMENTS CONSIDERED TO BE RELEVANT**

| Category* | Citation of document, with indication, where appropriate, of the relevant passages | Relevant to claim No. |
|---|---|---|
| A | CN 107787018 A (HUAWEI TECHNOLOGIES CO., LTD.) 09 March 2018 (2018-03-09) description, paragraphs [0411]-[0586] | 1-112 |
| A | CN 114830801 A (SONY CORP.) 29 July 2022 (2022-07-29) entire document | 1-112 |
| A | WO 2023158293 A1 (LG ELECTRONICS INC.) 24 August 2023 (2023-08-24) entire document | 1-112 |
| A | WO 2023011427 A1 (HUAWEI TECHNOLOGIES CO., LTD.) 09 February 2023 (2023-02-09) entire document | 1-112 |

☐ Further documents are listed in the continuation of Box C.　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 June 2024** | **24 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/124091**

| Patent document cited in search report | | | Publication date (day/month/year) | Patent family member(s) | | | Publication date (day/month/year) |
|---|---|---|---|---|---|---|---|
| CN | 107787018 | A | 09 March 2018 | WO | 2018036409 | A1 | 01 March 2018 |
| | | | | CN | 107787018 | B | 08 May 2020 |
| CN | 114830801 | A | 29 July 2022 | WO | 2021262654 | A1 | 30 December 2021 |
| | | | | US | 2021410163 | A1 | 30 December 2021 |
| | | | | US | 11405944 | B2 | 02 August 2022 |
| | | | | EP | 4147527 | A1 | 15 March 2023 |
| | | | | EP | 4147527 | A4 | 01 November 2023 |
| | | | | KR | 20220158029 | A | 29 November 2022 |
| | | | | JP | 2023525062 | W | 14 June 2023 |
| WO | 2023158293 | A1 | 24 August 2023 | | None | | |
| WO | 2023011427 | A1 | 09 February 2023 | CN | 115707140 | A | 17 February 2023 |

Form PCT/ISA/210 (patent family annex) (July 2022)